(19) Europäisches Patentamt
European Patent Office
Office européen des brevets

(11) **EP 4 235 525 A1**

(12) **EUROPEAN PATENT APPLICATION**
published in accordance with Art. 153(4) EPC

(43) Date of publication:
**30.08.2023  Bulletin 2023/35**

(21) Application number: **21888178.7**

(22) Date of filing: **29.06.2021**

(51) International Patent Classification (IPC):
**G06N 20/20** (2019.01)

(52) Cooperative Patent Classification (CPC):
**G06N 20/20**

(86) International application number:
**PCT/CN2021/103015**

(87) International publication number:
**WO 2022/095476 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 09.11.2020  CN 202011237954
30.12.2020  CN 202011606784

(71) Applicant: **Huawei Technologies Co., Ltd.**
**Shenzhen, Guangdong 518129 (CN)**

(72) Inventors:
• **LUO, Gang**
**Shenzhen, Guangdong 518129 (CN)**
• **LI, Qingrui**
**Shenzhen, Guangdong 518129 (CN)**
• **LEE, Choonmeng**
**Shenzhen, Guangdong 518129 (CN)**
• **TAO, Tao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA ENHANCEMENT METHOD AND APPARATUS, COMPUTER DEVICE, AND COMPUTER-READABLE STORAGE MEDIUM**

(57)    This application discloses a data augmentation method and apparatus, a computing device, and a computer-readable storage medium, and pertains to the field of artificial intelligence technologies. According to this method, a sample is processed through a plurality of data augmentation operations in a data augmentation policy, so that a plurality of target augmented samples can be obtained, thereby increasing a quantity of samples. In addition, because the plurality of data augmentation operations are performed on the sample within an operation intensity change interval indicated by target operation levels of the plurality of data augmentation operations, the plurality of obtained target augmented samples can change within the operation intensity change interval indicated by the target operation levels of the plurality of data augmentation operations, thereby improving sample diversity.

FIG. 9

EP 4 235 525 A1

**Description**

This application claims priority to Chinese Patent Application No. 202011606784.4, filed with the China National Intellectual Property Administration on December 30, 2020 and entitled "DATA AUGMENTATION METHOD AND APPARATUS, COMPUTING DEVICE, AND COMPUTER-READABLE STORAGE MEDIUM", and claims priority to Chinese Patent Application No. 202011237954.6, filed on November 9, 2020 and entitled "METHOD AND SYSTEM FOR IMPLEMENTING DATA AUGMENTATION POLICY", which are incorporated herein by reference in their entireties.

**TECHNICAL FIELD**

This application relates to the field of artificial intelligence technologies, and in particular, to a data augmentation method and apparatus, a computing device, and a computer-readable storage medium.

**BACKGROUND**

With development of artificial intelligence (artificial intelligence, AI) technologies, deep learning models as mainstream algorithm models of artificial intelligence are widely used in fields such as computer vision, natural language processing, and language recognition, and all have achieved excellent performance. Compared with conventional machine learning models, deep learning models can extract hierarchical representations (representation) from a large amount of annotated data (that is, samples annotated by labels). These hierarchical representations obtained through learning are exactly the key to the excellent performance (whether classification or regression) of the deep learning models.

For example, a deep learning model (briefly referred to as a recognition model) with a recognition function requires a large quantity of samples in a learning process. In many cases, a quantity and quality of samples play a crucial or even decisive role in performance of a recognition model obtained through training. However, existing samples (including public or private samples) cannot fully satisfy requirements of some service scenarios in terms of quantity and quality. For example, in many special or complex service scenarios, a data amount of samples is insufficient or sample categories are single, resulting in problems such as low precision and a low generalization capability occur in the recognition model obtained through training.

Currently, a quantity of samples is usually increased by using a data augmentation technology. For example, each data augmentation operation is performed on a sample based on an operation intensity of the data augmentation operation in a data augmentation policy, and obtained augmented samples are used as actual samples in an application scenario, to increase the quantity of samples in the application scenario. If each data augmentation operation is performed on the sample based on the operation intensity of the data augmentation operation in the data augmentation operation policy, the obtained augmented samples have single categories and lack diversity.

**SUMMARY**

Embodiments of this application provide a data augmentation method and apparatus, a computing device, a chip, and a computer storage medium, to improve sample diversity. The technical solutions are as follows:

According to a first aspect, a data augmentation method is provided, and is performed by a first node. The method includes:

obtaining a first target data augmentation policy; and performing, in operation intensity change intervals indicated by target operation levels of a plurality of data augmentation operations, the plurality of data augmentation operations on a first sample based on the first target data augmentation policy, to obtain a plurality of target augmented samples of the first sample, where the first target data augmentation policy indicates target operation levels of data augmentation operations, and one target operation level indicates one operation intensity change interval.

According to this method, a sample is processed through a plurality of data augmentation operations indicated by the data augmentation policy, so that a plurality of target augmented samples can be obtained, thereby increasing a quantity of samples. In addition, because the plurality of data augmentation operations are performed on the sample within an operation intensity change interval indicated by the target operation levels of the plurality of data augmentation operations, the plurality of obtained target augmented samples can change within the operation intensity change interval indicated by the target operation levels of the plurality of data augmentation operations, thereby improving sample diversity.

In a possible implementation, for any data in the first sample, a change corresponding to any data augmentation operation occurs on the any data in the plurality of target augmented samples, and is within an operation intensity change interval indicated by a target intensity level of the any data augmentation operation. For example, the first sample is an image, the any data is any pixel in the image, a target augmented sample of the first sample is an augmented image, and any data augmentation operation is a rotation operation. There may be countless rotation angles (that is, operation intensities) in the operation intensity change interval indicated by the target intensity level of the rotation operation. A partially augmented image is obtained by the first node by performing rotation operations at different rotation angles on the image in the operation intensity change interval. Therefore, for any pixel in the image, a rotation change occurs in a location of the any pixel in the partially augmented image, and the rotation change is reflected in the rotation angle, where a change of the rotation angle is within the operation intensity change interval indicated by the target intensity level of the rotation operation. It may be understood that, for a fixed location in the image, because this partially augmented image is obtained by performing rotation operations at different rotation angles on the image, a pixel at the fixed location in this partially augmented image changes.

In a possible implementation, the first target data augmentation policy is obtained through searching based on a plurality of configured operation levels of the plurality of data augmentation operations, a plurality of operation levels are configured for any data augmentation operation, and one operation level indicates one intensity change interval.

In a possible implementation, the first target data augmentation policy is determined based on a plurality of data augmentation policies, the plurality of data augmentation policies are obtained through searching based on a plurality of configured operation levels of the plurality of data augmentation operations, a plurality of operation levels are configured for any data augmentation operation, and one operation level indicates one intensity change interval.

In a possible implementation, the plurality of data augmentation policies are evaluated by a plurality of evaluation devices.

In a possible implementation, objects of second samples used for evaluating the plurality of data augmentation policies are a same object or objects of a same type.

In a possible implementation, the plurality of operation levels configured for the any data augmentation operation are obtained based on a target operation intensity change range of the any data augmentation operation, and the target operation intensity change range of the any data augmentation operation is configured by a configuration device.

In a possible implementation, a process of configuring the any data augmentation operation includes:
dividing, for any one of the plurality of data augmentation operations, the target operation intensity change range corresponding to the any data augmentation operation into a plurality of operation intensity change intervals; and configuring an operation level for each of the plurality of operation intensity change intervals.

Based on the foregoing possible implementation, after dividing the target operation intensity change range of the any data augmentation operation into the plurality of operation intensity change intervals, the first node configures one operation level for each operation intensity change interval, so that in a data augmentation policy, an intensity level may be for indicating an operation intensity change interval, thereby simplifying a representation form of the operation intensity change interval.

In a possible implementation, the first target data augmentation policy further indicates a target operation probability of each of the plurality of data augmentation operations, and a target operation probability of the any data augmentation operation is a probability of performing the any data augmentation operation on the first sample; and the obtaining a first target data augmentation policy includes:
determining the first target data augmentation policy based on the plurality of data augmentation policies, where any data augmentation policy indicates an operation probability and an operation level of each of the plurality of data augmentation operations, and the operation probability of the any data augmentation operation is a probability of performing the any data augmentation operation on second samples.

Based on the foregoing possible implementation, the first node generates an optimal data augmentation policy, that is, the first target data augmentation policy, based on the plurality of data augmentation policies, to subsequently increase a quantity of samples and improve sample diversity based on the optimal target data augmentation policy.

In a possible implementation, the determining the first target data augmentation policy based on the plurality of data augmentation policies includes:

selecting a plurality of second target data augmentation policies from the plurality of data augmentation policies based on evaluation values of the plurality of data augmentation policies, and generating the first target data augmentation policy based on the plurality of second target data augmentation policies, where

evaluation values of the plurality of second target data augmentation policies are all greater than evaluation values of data augmentation policies in the plurality of data augmentation policies other than the plurality of second target data augmentation policies, and an evaluation value of the any data augmentation policy indicates a degree of quality of a recognition model obtained through training based on an augmented sample obtained based on the any data augmentation policy.

Based on the foregoing possible implementation, the first node may first select some better data augmentation policies, for example, the second target data augmentation policies, from the plurality of data augmentation policies based on the evaluation values of the plurality of data augmentation policies, and then generate the optimal first target data augmentation policy based on the selected plurality of second target data augmentation policies, so that quality of the first target data augmentation policy can be ensured.

In a possible implementation, the generating the first target data augmentation policy based on the plurality of second target data augmentation policies includes:

determining target operation probabilities and target operation levels of the plurality of data augmentation operations based on the operation probabilities and the operation levels of the plurality of data augmentation operations in the plurality of second target data augmentation policies; and generating the first target data augmentation policy based on the determined target operation probabilities and target operation levels of the plurality of data augmentation operations.

In a possible implementation, the determining target operation probabilities and target operation levels of the plurality of data augmentation operations based on the operation probabilities and the operation levels of the plurality of data augmentation operations in the plurality of second target data augmentation policies includes:

for the any data augmentation operation, clustering a plurality of operation levels of the any data augmentation operation in the plurality of second target data augmentation policies, to obtain at least one operation level category; and for any one of the at least one operation level category, determining, based on an operation level of the any operation level category and an operation probability of the any data augmentation operation in a third target data augmentation policy in the plurality of second target data augmentation policies, a target operation intensity and a target operation probability of the any data augmentation operation, where the third target data augmentation policy is a second target data augmentation policy to which the operation level of the any operation level category belongs.

In a possible implementation, the determining, based on an operation level of the any operation level category and an operation probability of the any data augmentation operation in a third target data augmentation policy in the plurality of second target data augmentation policies, a target operation intensity and a target operation probability of the any data augmentation operation includes:

determining a target operation level of the any data augmentation operation based on the operation level of the any operation level category; and determining the target operation probability of the any data augmentation operation based on the operation probability of the any data augmentation operation in the third target data augmentation policy in the plurality of second target data augmentation policies.

In a possible implementation, the determining a target operation level of the any data augmentation operation based on the operation level of the any operation level category includes:

determining a minimum operation level and a maximum operation level in the any operation level category; and determining each operation level that is greater than or equal to the minimum operation level and that is less than or equal to the maximum operation level as the target operation level of the any data augmentation operation.

Based on the foregoing possible implementation, the first node determines each operation level that is greater than or equal to the minimum operation level and less than or equal to the maximum operation level as the target operation level of the any data augmentation operation, so that a plurality of target operation levels of the any data augmentation operation are consecutive, and intensity change intervals corresponding to the consecutive target operation levels are also consecutive. In this way, subsequently, the first node performs, in the operation intensity change interval indicated by the target operation level of the any data augmentation operation, the any data augmentation operation on the first sample, and an obtained augmented sample changes in a continuous operation intensity change interval, thereby further increasing sample diversity and better complying with a sample change status in a real application scenario.

In a possible implementation, the determining a target operation level of the any data augmentation operation based on the operation level of the any operation level category includes:

determining each operation level in the any operation level category as the target operation level of the any data augmentation operation.

In a possible implementation, the target operation probability of the any data augmentation operation is an average probability of operation probabilities of the any data augmentation operation in the third target data augmentation policy in the plurality of second target data augmentation policies.

In a possible implementation, before the determining the first target data augmentation policy based on the plurality of data augmentation policies, the method further includes:

performing iterative calculation based on an initial data augmentation policy, to obtain the plurality of data augmentation policies.

In a possible implementation, the performing iterative calculation based on an initial data augmentation policy includes:

determining, in a process of $i^{th}$ time of iterative calculation, an $i^{th}$ data augmentation policy in the plurality of data augmentation policies based on a data augmentation policy determined in processes of previous $i - 1$ times of iterative calculation and each data augmentation policy in the initial data augmentation policy, where $i$ is an integer greater than or equal to 1 or less than or equal to $N$, and $i$ is a total quantity of times of iterative calculation.

In a possible implementation, the determining an $i^{th}$ data augmentation policy in the plurality of data augmentation policies based on a data augmentation policy determined in processes of previous $i - 1$ times of iterative calculation and each data augmentation policy in the initial data augmentation policy includes:

for the any data augmentation operation, predicting, based on a plurality of operation levels of the any data augmentation operation in the data augmentation policies and a plurality of evaluation values of the data augmentation policies, an operation level of the any data augmentation operation in the $i^{th}$ data augmentation policy, where an evaluation value of any data augmentation policy indicates a degree of quality of a recognition model obtained through training based on an augmented sample obtained based on the any data augmentation policy;

for the any data augmentation operation, predicting, based on a plurality of operation levels of the any data augmentation operation in the data augmentation policies and a plurality of evaluation values of the data augmentation policies, an operation level of the any data augmentation operation in the $i^{th}$ data augmentation policy, where an evaluation value of any data augmentation policy indicates a degree of quality of a recognition model obtained through training based on an augmented sample obtained based on the any data augmentation policy;

for the any data augmentation operation, predicting, based on a plurality of operation probabilities of the any data augmentation operation in the data augmentation policies and a plurality of evaluation values of the data augmentation policies, an operation probability of the any data augmentation operation in the $i^{th}$ data augmentation policy; and

generating the $i^{th}$ data augmentation policy based on the predicted operation levels and operation probabilities of the plurality of data augmentation operations.

Based on the foregoing possible implementation, the first node predicts, based on the operation level and the operation probability of the any data augmentation operation in the data augmentation policies and the evaluation value in the data policies, an operation level and an operation probability of any data augmentation operation in a new data augmentation policy, so that a subsequently predicted data augmentation policy can have high evaluation value.

In a possible implementation, the predicting, based on a plurality of operation levels of the any data augmentation operation in the data augmentation policies and a plurality of evaluation values of the data augmentation policies, an operation level of the any data augmentation operation in the $i^{th}$ data augmentation policy includes:

determining, based on the plurality of operation levels and the plurality of evaluation values, a multivariate Gaussian distribution that the operation level of the any data augmentation operation obeys; and

under the multivariate Gaussian distribution that the operation level of the any data augmentation operation obeys, determining an operation level that enables an acquisition function to take a maximum value as the operation level of the any data augmentation operation in the $i^{th}$ data augmentation policy.

In a possible implementation, the predicting, based on a plurality of operation probabilities of the any data augmentation operation in the data augmentation policies and a plurality of evaluation values of the data augmentation policies, an operation probability of the any data augmentation operation in the $i^{th}$ data augmentation policy includes:

determining, based on the plurality of operation probabilities and the plurality of evaluation values, a multivariate Gaussian distribution that the operation probability of the any data augmentation operation obeys; and

under the multivariate Gaussian distribution that the operation probability of the any data augmentation operation obeys, determining an operation probability that enables an acquisition function to take a maximum value as the operation probability of the any data augmentation operation in the $i^{th}$ data augmentation policy.

In a possible implementation, after the determining an $i^{th}$ data augmentation policy in the plurality of data augmentation policies, the method further includes:

performing the plurality of data augmentation operations on the plurality of second samples based on the operation probabilities and the operation levels of the plurality of data augmentation operations in the $i^{th}$ data augmentation policy, to obtain a plurality of augmented samples of the plurality of second samples;

obtaining an $i^{th}$ recognition model through training based on the plurality of augmented samples; and

obtaining an evaluation value of the $i^{th}$ data augmentation policy based on the $i^{th}$ recognition model.

In a possible implementation, the obtaining an $i^{th}$ recognition model through training based on the plurality of augmented samples includes:

training a pre-training model based on the plurality of augmented samples, to obtain the $i^{th}$ recognition model, where the pre-training model is obtained through training based on a plurality of third samples of a plurality of objects of different types, and precision of the pre-training model is less than a precision threshold.

In a possible implementation, an object of the first sample and an object of the second sample belong to a same category, or an object of the first sample and an object of the second sample are a same object.

Based on the foregoing possible implementation, each data augmentation policy in the iterative calculation process is evaluated through a sample of a same object or samples of objects of a same type, so that an evaluation result of each data augmentation policy is related to the same object or the objects of the same type. Therefore, if a first target data augmentation policy finally generated based on each data augmentation policy is corresponding to the same object or the objects of the same type, a recognition model obtained through training by subsequently using the first target data augmentation policy has an optimal recognition effect when the same object or the objects of the same type are identified.

In a possible implementation, there are a plurality of $i^{th}$ data augmentation policies, and after the generating the $i^{th}$ data augmentation policy, the method further includes:

sending at least one $i^{th}$ data augmentation operation policy to each of a plurality of evaluation devices; and

receiving an evaluation value of the at least one $i^{th}$ data augmentation operation policy from each of the plurality of evaluation devices.

In a possible implementation, the first target data augmentation policy further indicates a target operation probability of each of the plurality of data augmentation operations, and a target operation probability of any data augmentation operation is a probability of performing the any data augmentation operation on the first sample; and
the performing, in operation intensity change intervals indicated by target operation levels of a plurality of data augmentation operations, the plurality of data augmentation operations on a first sample based on the first target data augmentation policy includes:
performing the plurality of data augmentation operations on the first sample based on the target operation probability and the target operation level of each of the plurality of data augmentation operations, where the any data augmentation operation is performed on a target augmented sample of the target operation probability of the any data augmentation operation.

Based on the foregoing possible implementation, each augmented sample on which various data augmentation operations are performed has a specific proportion in the plurality of augmented samples, so that the plurality of augmented samples better comply with a real application scenario.

In a possible implementation, the performing the plurality of data augmentation operations on the first sample based on the target operation probability and the target operation level of each of the plurality of data augmentation operations includes:
for the any data augmentation operation, performing, based on the target operation probability of the any data augmentation operation, the any data augmentation operation on the first sample in an operation intensity change interval range indicated by the target operation level of the any data augmentation operation.

In a possible implementation, obtaining the first sample from an application node through a target interface; and sending the plurality of target augmented samples to the application node through the target interface.

According to a second aspect, a data augmentation apparatus is provided. The apparatus includes:

an obtaining module, configured to obtain a first target data augmentation policy, where the first target data augmentation policy indicates target operation levels of data augmentation operations, and one target operation level indicates one operation intensity change interval; and
an augmentation module, configured to perform, in operation intensity change intervals indicated by target operation levels of a plurality of data augmentation operations, the plurality of data augmentation operations on a first sample based on the first target data augmentation policy, to obtain a plurality of target augmented samples of the first sample.

In a possible implementation, for any data in the first sample, a change corresponding to any data augmentation operation occurs on the any data in the plurality of target augmented samples, and is within an operation intensity change interval indicated by a target intensity level of the any data augmentation operation.

In a possible implementation, the first target data augmentation policy is obtained through searching based on a plurality of configured operation levels of the plurality of data augmentation operations, a plurality of operation levels are configured for any data augmentation operation, and one operation level indicates one intensity change interval.

In a possible implementation, the first target data augmentation policy is determined based on a plurality of data augmentation policies, the plurality of data augmentation policies are obtained through searching based on a plurality of configured operation levels of the plurality of data augmentation operations, a plurality of operation levels are configured for any data augmentation operation, and one operation level indicates one intensity change interval.

In a possible implementation, the plurality of data augmentation policies are evaluated by a plurality of evaluation devices.

In a possible implementation, objects of second samples used for evaluating the plurality of data augmentation policies are a same object or objects of a same type.

In a possible implementation, the plurality of operation levels configured for the any data augmentation operation are obtained based on a target operation intensity change range of the any data augmentation operation, and the target operation intensity change range of the any data augmentation operation is configured by a configuration device.

In a possible implementation, the apparatus further includes:

a division module, configured to divide, for any one of the plurality of data augmentation operations, the target operation intensity change range corresponding to the any data augmentation operation into a plurality of operation intensity change intervals; and

a configuration module, adapted to configure an operation level for each of the plurality of operation intensity change intervals.

In a possible implementation, the first target data augmentation policy further indicates a target operation probability of each of the plurality of data augmentation operations, and a target operation probability of the any data augmentation operation is a probability of performing the any data augmentation operation on the first sample; and the obtaining module is configured to:

determine the first target data augmentation policy based on the plurality of data augmentation policies, where any data augmentation policy indicates an operation probability and an operation level of each of the plurality of data augmentation operations, and the operation probability of the any data augmentation operation is a probability of performing the any data augmentation operation on second samples.

In a possible implementation, the obtaining module includes:

a selection submodule, configured to select a plurality of second target data augmentation policies from the plurality of data augmentation policies based on evaluation values of the plurality of data augmentation policies, where evaluation values of the plurality of second target data augmentation policies are all greater than evaluation values of data augmentation policies in the plurality of data augmentation policies other than the plurality of second target data augmentation policies, and an evaluation value of the any data augmentation policy indicates a degree of quality of a recognition model obtained through training based on an augmented sample obtained based on the any data augmentation policy; and

a generation submodule, configured to generate the first target data augmentation policy based on the plurality of second target data augmentation policies.

In a possible implementation, the generation submodule includes:

a determining unit, configured to determine target operation probabilities and target operation levels of the plurality of data augmentation operations based on the operation probabilities and the operation levels of the plurality of data augmentation operations in the plurality of second target data augmentation policies; and

a generation unit, configured to generate the first target data augmentation policy based on the determined target operation probabilities and target operation levels of the plurality of data augmentation operations.

In a possible implementation, the determining unit includes:

a clustering subunit, configured to: for the any data augmentation operation, cluster a plurality of operation levels of the any data augmentation operation in the plurality of second target data augmentation policies, to obtain at least one operation level category; and

a determining subunit, configured to: for any one of the at least one operation level category, determine, based on an operation level of the any operation level category and an operation probability of the any data augmentation operation in a third target data augmentation policy in the plurality of second target data augmentation policies, a target operation intensity and a target operation probability of the any data augmentation operation, where the third target data augmentation policy is a second target data augmentation policy to which the operation level of the any operation level category belongs.

In a possible implementation, the determining subunit includes:

a first determining element, configured to determine a target operation level of the any data augmentation operation based on the operation level of the any operation level category; and

a second determining element, configured to determine the target operation probability of the any data augmentation operation based on the operation probability of the any data augmentation operation in the third target data augmentation policy in the plurality of second target data augmentation policies.

In a possible implementation, the first determining element is configured to:

determine a minimum operation level and a maximum operation level in the any operation level category; and determine each operation level that is greater than or equal to the minimum operation level and that is less than or equal to the maximum operation level as the target operation level of the any data augmentation operation.

In a possible implementation, the first determining element is configured to: determine each operation level in the any operation level category as the target operation level of the any data augmentation operation.

In a possible implementation, the target operation probability of the any data augmentation operation is an average probability of operation probabilities of the any data augmentation operation in the third target data augmentation policy in the plurality of second target data augmentation policies.

The apparatus further includes:
an iteration module, configured to perform iterative calculation based on an initial data augmentation policy, to obtain the plurality of data augmentation policies.

In a possible implementation, the iteration module is configured to:
determine, in a process of $i^{th}$ time of iterative calculation, an $i^{th}$ data augmentation policy in the plurality of data augmentation policies based on a data augmentation policy determined in processes of previous $i - 1$ times of iterative calculation and each data augmentation policy in the initial data augmentation policy, where $i$ is an integer greater than or equal to 1 or less than or equal to $N$, and $i$ is a total quantity of times of iterative calculation.

In a possible implementation, the iteration module includes:

a first prediction submodule, configured to: for the any data augmentation operation, predict, based on a plurality of operation levels of the any data augmentation operation in the data augmentation policies and a plurality of evaluation values of the data augmentation policies, an operation level of the any data augmentation operation in the $i^{th}$ data augmentation policy, where an evaluation value of any data augmentation policy indicates a degree of quality of a recognition model obtained through training based on an augmented sample obtained based on the any data augmentation policy;

a second prediction submodule, configured to: for the any data augmentation operation, predict, based on a plurality of operation probabilities of the any data augmentation operation in the data augmentation policies and a plurality of evaluation values of the data augmentation policies, an operation probability of the any data augmentation operation in the $i^{th}$ data augmentation policy; and

a generation submodule, configured to generate the $i^{th}$ data augmentation policy based on the predicted operation levels and operation probabilities of the plurality of data augmentation operations.

In a possible implementation, the first prediction submodule is configured to:

determine, based on the plurality of operation levels and the plurality of evaluation values, a multivariate Gaussian distribution that the operation level of the any data augmentation operation obeys; and under the multivariate Gaussian distribution that the operation level of the any data augmentation operation obeys, determine an operation level that enables an acquisition function to take a maximum value as the operation level of the any data augmentation operation in the $i^{th}$ data augmentation policy.

In a possible implementation, the second prediction submodule is configured to:

determine, based on the plurality of operation probabilities and the plurality of evaluation values, a multivariate Gaussian distribution that the operation probability of the any data augmentation operation obeys; and under the multivariate Gaussian distribution that the operation probability of the any data augmentation operation obeys, determine an operation probability that enables an acquisition function to take a maximum value as the operation probability of the any data augmentation operation in the $i^{th}$ data augmentation policy.

The apparatus further includes:

an acquiring module, configured to perform the plurality of data augmentation operations on the plurality of second samples based on the operation probabilities and the operation levels of the plurality of data augmentation operations in the $i^{th}$ data augmentation policy, to obtain a plurality of augmented samples of the plurality of second samples;

a training module, configured to obtain an $i^{th}$ recognition model through training based on the plurality of augmented samples; and

a target obtaining module, configured to obtain an evaluation value of the $i^{th}$ data augmentation policy based on the $i^{th}$ recognition model.

In a possible implementation, the training module is configured to:
train a pre-training model based on the plurality of augmented samples, to obtain the $i^{th}$ recognition model, where the pre-training model is obtained through training based on a plurality of third samples of a plurality of objects of different types, and precision of the pre-training model is less than a precision threshold.

In a possible implementation, an object of the first sample and an object of the second sample belong to a same category, or an object of the first sample and an object of the second sample are a same object.

In a possible implementation, the apparatus further includes:

a first sending module, configured to send at least one $i^{th}$ data augmentation operation policy to each of a plurality of evaluation devices; and

a first receiving module, configured to receive an evaluation value of the at least one $i^{th}$ data augmentation operation policy from each of the plurality of evaluation devices.

In a possible implementation, the first target data augmentation policy further indicates a target operation probability of each of the plurality of data augmentation operations, and a target operation probability of any data augmentation operation is a probability of performing the any data augmentation operation on the first sample; and the augmentation module is configured to:
perform the plurality of data augmentation operations on the first sample based on the target operation probability and the target operation level of each of the plurality of data augmentation operations, where the any data augmentation operation is performed on a target augmented sample of the target operation probability of the any data augmentation operation.

In a possible implementation, the augmentation module is configured to:
for the any data augmentation operation, perform, based on the target operation probability of the any data augmentation operation, the any data augmentation operation on the first sample in an operation intensity change interval range indicated by the target operation level of the any data augmentation operation.

In a possible implementation, the apparatus further includes:

a second receiving module, configured to obtain the first sample from an application node through a target interface; and

a second sending module, configured to send the plurality of target augmented samples to the application node through the target interface.

According to a third aspect, a computing device is provided. The computing device includes a processor and a memory. The memory stores at least one piece of program code, and the program code is loaded and executed by the processor to implement an operation performed in the data augmentation method according to the first aspect.

According to a fourth aspect, a computer-readable storage medium is provided. The storage medium stores at least one piece of program code, and the program code is loaded and executed by a processor to implement an operation performed in the data augmentation method according to the first aspect.

According to a fifth aspect, a computer program product or a computer program is provided. The computer program product or the computer program includes program code, the program code is stored in a computer-readable storage medium, a processor of a computing device reads the program code from the computer-readable storage medium, and the processor executes the program code, to enable the computer device to perform the method provided in the first aspect or each optional implementation of the first aspect.

**BRIEF DESCRIPTION OF DRAWINGS**

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.

FIG. 1 is a schematic diagram of a data augmentation system according to an embodiment of this application;
FIG. 2 is a schematic diagram of a structure of a first node according to an embodiment of this application;

FIG. 3 is a schematic diagram of a data augmentation policy according to an embodiment of this application;

FIG. 4 is a schematic diagram of a structure of another data augmentation system according to an embodiment of this application;

FIG. 5 is a diagram of an operating principle of a second node according to an embodiment of this application;

FIG. 6 is a schematic diagram of a data augmentation system in a cloud scenario according to an embodiment of this application;

FIG. 7 is a schematic diagram of a structure of a computing device according to an embodiment of this application;

FIG. 8 is a flowchart of an initialization configuration according to an embodiment of this application;

FIG. 9 is a flowchart of a data augmentation method according to an embodiment of this application;

FIG. 10 is a schematic diagram of a causal relationship between a sample label, an object, and a photographing manner according to an embodiment of this application;

FIG. 11 is a curve diagram of a precision change of a recognition model in a training process according to an embodiment of this application;

FIG. 12 shows a distribution fitting process of operation levels of data augmentation operations according to an embodiment of this application;

FIG. 13A and FIG. 13B are a flowchart of a data augmentation method according to an embodiment of this application;

FIG. 14 is a schematic diagram of a data augmentation system according to an embodiment of this application;

FIG. 15 is a schematic diagram of a data change distribution according to an embodiment of this application;

FIG. 16 is a schematic diagram of a distribution of changes of specific pixel values during a change of a sharpening operation according to an embodiment of this application; and

FIG. 17 is a schematic diagram of a structure of a data augmentation apparatus according to an embodiment of this application.

## DESCRIPTION OF EMBODIMENTS

To make the objectives, technical solutions, and advantages of this application clearer, the following further describes the implementations of this application in detail with reference to the accompanying drawings.

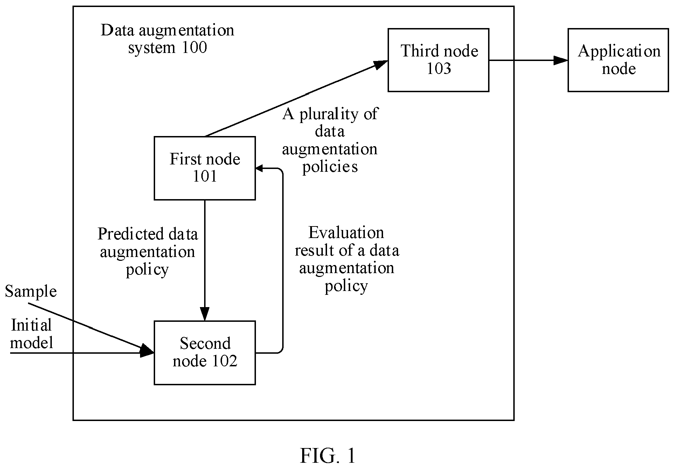

FIG. 1 is a schematic diagram of a data augmentation system according to an embodiment of this application. Referring to FIG. 1, the data augmentation system 100 includes a first node 101, a second node 102, and a third node 103. In the data augmentation system 100, the first node 101 predicts, based on an evaluation result of at least one data augmentation policy, a data augmentation policy that can achieve a better evaluation result, and feeds back the predicted data augmentation policy to the second node 102. The second node 102 evaluates the predicted data augmentation policy, and feeds back an evaluation result of the predicted data augmentation policy to the first node 101, where the at least one data augmentation policy is a data augmentation policy historically predicted by the first node.

In this case, for the first node 101, a data augmentation policy that is predicted last time and that has an evaluation result is a historically predicted data augmentation policy, indicating that each data augmentation policy historically predicted by the first node 101 is updated. In this case, the first node 101 re-predicts, based on an evaluation result of each historically predicted data augmentation policy, a data augmentation policy that can achieve a better evaluation result. The rest can be deduced by analogy, until each data augmentation policy historically predicted by the first node 101 satisfies a preset condition. In this case, the first node 101 sends each historically predicted data augmentation policy to the third node 103, and the third node 103 generates at least one first target data augmentation policy based on each received data augmentation policy.

Then, the third node 103 provides the at least one first target data augmentation policy for an external application node, and the application node performs data augmentation on a plurality of samples through any first target data augmentation policy, to obtain a large quantity of augmented samples. In this way, the application node subsequently performs model training through the large quantity of augmented samples, to obtain a recognition model with high precision.

To further describe an operating principle of each node in the data augmentation system 100, the following describes each node with reference to a physical architecture of each node.

(1) First node 101

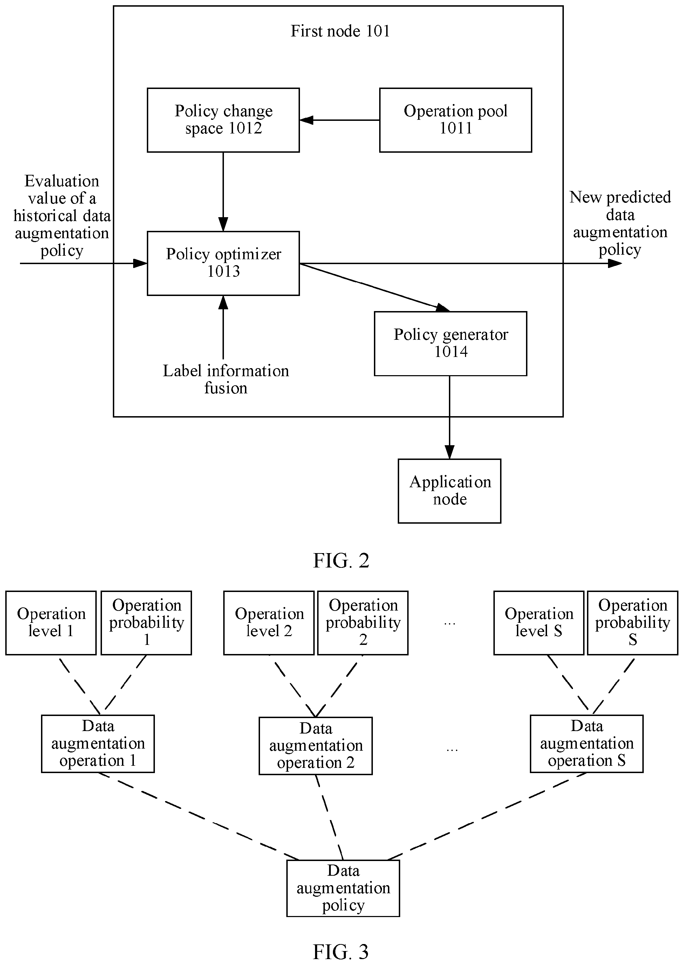

FIG. 2 is a schematic diagram of a structure of a first node according to an embodiment of this application. The first node 101 includes an operation pool 1011, a policy change space 1012, and a policy optimizer 1013. The operation pool 1011 is configured to provide a configuration of a data augmentation operation for a user. In a possible implementation, based on a requirement of an application scenario, the user configures, in the operation pool 1011, a plurality of data augmentation operations and a target operation intensity change range of each of the plurality of data augmentation operations. The plurality of data augmentation operations are data augmentation operations required by a sample in the application scenario, and a target operation intensity change range of a data augmentation operation is a change range of intensity of performing the data augmentation operation on the sample in the application scenario. In the policy change space 1012, for any one of the plurality of data augmentation operations, the first node allocates, based on a target operation intensity change range that is of the any data augmentation operation and that is configured in the operation pool 1011, a plurality of operation levels to the any data augmentation operation, and allocates a probability change interval to the any data augmentation operation, so that the any data augmentation operation corresponds to the plurality of operation levels and one probability change interval. The first node can further store, in the policy change space 1012, an operation level and a probability change interval that correspond to each of the plurality of data augmentation operations. An operation level of the any data augmentation operation indicates an operation intensity change interval, and the operation intensity change interval is a subinterval of a target operation intensity change range of the data augmentation operation.

Initially, for the any data augmentation operation, the policy optimizer 1013 randomly selects, from the policy change space 1012, an operation level of the any data augmentation operation and an operation probability in a probability change interval, to randomly find a data augmentation policy through search. The data augmentation policy includes an operation probability and an operation level of each of the plurality of data augmentation operations in the policy change space 1012. FIG. 3 is a schematic diagram of a data augmentation policy according to an embodiment of this application. The data augmentation policy shown in FIG. 3 includes S data augmentation operations being respectively data augmentation operations 1 to S. The data augmentation policy further includes operation probabilities of the data augmentation operations 1 to S being respectively operation probabilities 1 to S. The data augmentation policy further includes operation levels of the data augmentation operations 1 to S being respectively operation levels 1 to S. S is an integer greater than or equal to 1. It should be noted that any data augmentation operation in the data augmentation policy shown in FIG. 3 has one operation level and one operation probability. In some other embodiments, any data augmentation operation in one data augmentation operation policy may alternatively have a plurality of operation levels.

After finding a first data augmentation policy through search, the policy optimizer 1013 sends the first data augmentation policy to the second node 102, and the second node 102 feeds back an evaluation result of the first data augmentation policy. The policy optimizer 1013 searches the policy change space 1012 based on the evaluation result of the first data augmentation policy, to obtain a second data augmentation policy. Because the second data augmentation policy is found through search based on the evaluation result of the first data augmentation policy, the second data augmentation policy is unknown for the first data augmentation operation policy. Therefore, the second data augmentation policy is a data augmentation policy that can achieve a better evaluation result and that is predicted by the policy optimizer 1013. The policy optimizer 1013 sends the second data augmentation policy to the second node 102, and the second node 102 feeds back an evaluation result of the second data augmentation policy. The policy optimizer 1013 continues searching in the policy change space 1012 based on the evaluation result of the first data augmentation policy and the evaluation result of the second data augmentation policy, to obtain a third data augmentation policy. The rest can be deduced by analogy, until each data augmentation policy found by the policy optimizer 1013 through search satisfies a preset condition. In this case, the policy optimizer 1013 sends each data augmentation policy to the third node 103, and the third node 103 generates at least one first target data augmentation policy based on each received data augmentation policy.

In some embodiments, the policy optimizer 1013 can alternatively fuse sample labels of samples to predict a data augmentation policy. In a possible implementation, a data augmentation policy predicted by the policy optimizer 1013 in an iteration process is oriented to samples with a same sample label, or is oriented to samples with a same type of sample labels.

In some embodiments, a sample label of an object is for identifying the object and a type of the object. If objects of samples in a training set belong to different types, the first node 101 may finally generate different types of target data augmentation policies. Each type of target data augmentation policy corresponds to one type of object. For example, in an iteration process in which the first node generates any type of target data augmentation policy, the policy optimizer 1013 sends a predicted data augmentation policy and the any type to the second node 102, so that the second node 102 evaluates the received data augmentation policy based on a sample having the any type of sample label. When a data augmentation policy of any type satisfies a preset condition, the policy optimizer 1013 sends each data augmentation policy of the type to a third node 103, and third node 103 generates an optimal data augmentation policy (that is, a target data augmentation policy) for the any type based on each data augmentation policy of the type, so that an application node obtains an augmented sample based on the optimal data augmentation policy of the any type, and performs training to obtain a recognition model that is suitable for each object of the any type.

It should be noted that the data augmentation system 100 shown in FIG. 1 is described through an example in which the first node 101 and the third node 103 are two independent nodes. In some other embodiments, the first node 101 and the third node 103 are a same node, and the third node 103 may be used as a unit in the first node 101 and exist in the first node 101. For example, the first node 101 shown in FIG. 2 may further include a policy generator 1014, and the policy generator 1014 is the third node 103.

(2) Second node 102

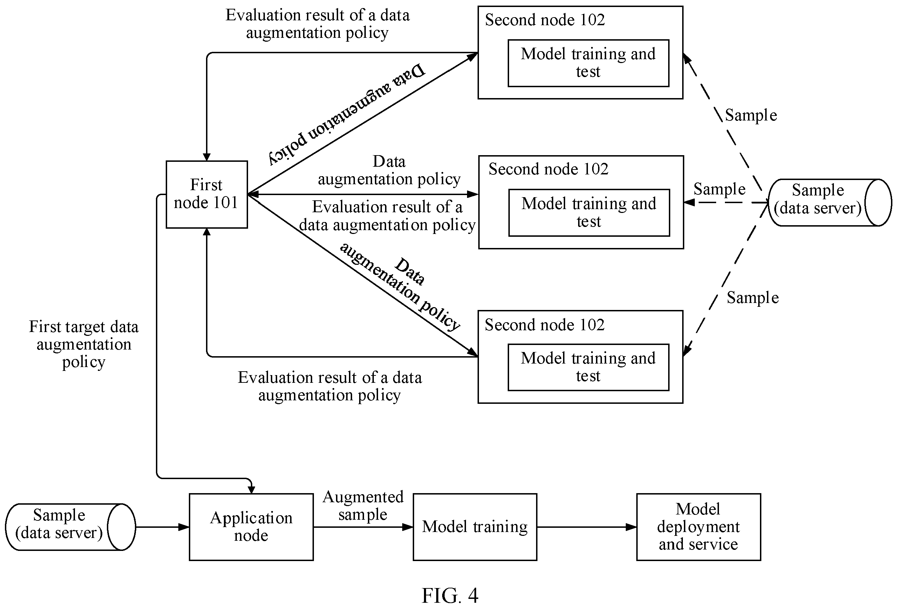

There may be one or more second nodes 102 in the data augmentation system 100, and the second node 102 may be considered as an evaluation device. In some embodiments, the first node 101 can predict a plurality of data augmentation policies in each iteration process (that is, search process). If there are a plurality of second nodes 102 in the data augmentation system 100, the first node 101 may send the plurality of data augmentation policies predicted each time to the plurality of second nodes 102 in a distributed manner. Each second node 102 evaluates some data augmentation policies in the plurality of data augmentation policies, and each second node 102 sends, to the first node 101, evaluation results of the data augmentation policies that the second node is responsible for evaluating. In this way, the first node 101 can obtain evaluation results of a plurality of data augmentation policies predicted in each iteration process, thereby implementing distributed evaluation. In this distributed evaluation process, the evaluation is performed in parallel by the plurality of second nodes 102, thereby improving evaluation efficiency of the data augmentation system 100. For example, FIG. 4 is a schematic diagram of a structure of another data augmentation system according to an embodiment of this application. A first node sends a plurality of data augmentation policies in each iteration process to a plurality of second nodes, and the plurality of second nodes evaluate the plurality of data augmentation policies, and return evaluation results of the data augmentation policies. Then, the first node generates a first target data augmentation policy based on each historical data augmentation policy, and sends the first target data augmentation policy to an application node. The application node performs, through the first target data augmentation policy, data augmentation on a sample obtained from a data server, performs model training based on an augmented sample obtained through the augmentation, and deploys a recognition model obtained through the training to provide a service.

In a possible implementation, for any received data augmentation policy, the second node 102 performs a data augmentation operation on a plurality of samples through the any data augmentation policy, to obtain a plurality of augmented samples of the plurality of samples. Then, the second node 102 trains an initial model through the plurality of augmented samples, to obtain a recognition model. The plurality of samples may be obtained by the second node 102 from the data server. Further, the second node 102 evaluates a recognition effect of the recognition model, and feeds back an evaluation result of the recognition model as an evaluation result of the any data augmentation policy to the first node 101.

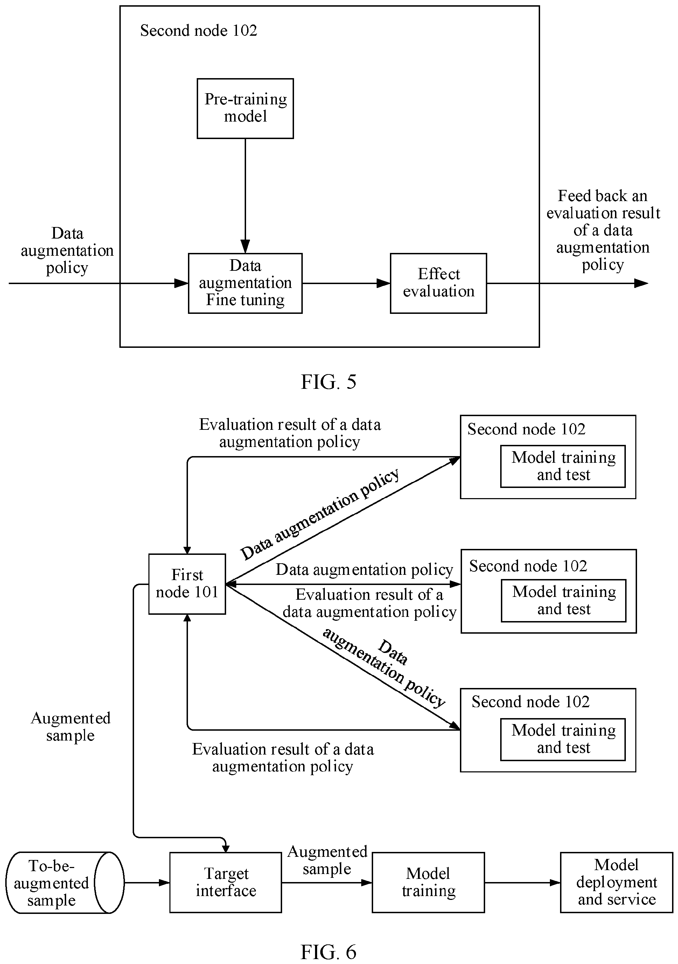

In some embodiments, the second node 102 may first obtain a pre-training model, where the pre-training model may be a recognition model on which training is about to be finished. For example, this is shown as follows: Precision of the pre-training model is less than a precision threshold. After the second node 102 obtains a plurality of augmented samples based on a data augmentation policy, the second node 102 trains the pre-training model through the plurality of augmented samples, to obtain the recognition model. For example, FIG. 5 is a diagram of an operating principle of a second node according to an embodiment of this application. After receiving a data augmentation policy, the second node performs retraining or fine tuning on a pre-training model through an augmented sample obtained based on the data augmentation policy, to obtain a recognition model, and evaluates a recognition effect of the recognition model, to obtain an evaluation result of the data augmentation policy.

(3) Third node 103

In a possible implementation, the third node 103 selects, based on evaluation results of a plurality of received data augmentation policies, a plurality of better data augmentation policies (for example, data augmentation policies with higher evaluation results in the plurality of data augmentation policies) from the plurality of data augmentation policies, and generates a first target data augmentation policy based on the plurality of better data augmentation policies.

When the plurality of data augmentation policies are evaluated based on a plurality of samples of one object, or are evaluated based on a plurality of samples of a plurality of objects of one type, a first target data augmentation policy finally generated by the third node 103 based on the plurality of data augmentation policies corresponds to the object or the type, and the application node obtains an augmented sample based on the first target data augmentation policy, and performs training to obtain a recognition model, so that a recognition effect for the object or the objects of the type is better.

It should be noted that the data augmentation system 100 may be deployed on a plurality of computing devices, and the plurality of computing devices are respectively configured to implement functions of the first node 101, the second node 102, and the third node 103. In this case, the first node 101, the second node 102, and the third node 103 are computing devices independent of each other. In some embodiments, some or all of the first node 101, the second node 102, and the third node 103 are integrated into one computing device. In this case, each node in the computing device is a unit of the device. For example, the first node 101 further has functions of the second node 102 and the third node 103. A deployment manner of each node in the data augmentation system 100 is not limited in this embodiment of this application.

In some embodiments, the first node 101, the second node 102, and the third node 103 may alternatively be cloud computing devices. When the first node 101, the second node 102, and the third node 103 are cloud computing devices, the data augmentation system 100 is deployed on a cloud. For example, FIG. 6 is a schematic diagram of a data augmentation system in a cloud scenario according to an embodiment of this application. An application node uploads, through a target interface, a to-be-augmented sample (for example, customer data) to a first node deployed on a cloud. For example, an upload interface is displayed in the application node, and a user uploads the to-be-augmented sample on the upload interface. After the application node detects that the user performs a confirmation operation on the upload interface, the application node sends the to-be-augmented sample to the first node through the target interface, to implement upload. After the to-be-augmented sample is uploaded, the first node randomly searches a policy change space to find a plurality of data augmentation policies, and sends at least one found data augmentation policy and the to-be-augmented sample to each of a plurality of second nodes. After any second node receives the at least one data augmentation policy and the to-be-augmented sample, for any one of the at least one data augmentation policy, the any second node evaluates the any data augmentation policy based on the to-be-augmented sample, and feeds back an evaluation result of the any data augmentation policy to the first node. Then, the first node generates a plurality of new data augmentation policies based on evaluation results of the plurality of data augmentation policies, and the plurality of nodes evaluate the plurality of new data augmentation policies again. The rest can be deduced by analogy. When there are sufficient data augmentation policies historically generated, the first node generates a target data augmentation policy based on the historically generated data augmentation policies, and the first node performs a plurality of data augmentation operations on the to-be-augmented sample through the target data augmentation policy, to obtain a plurality of augmented samples of the to-be-augmented sample. The application node downloads the plurality of augmented samples through the target interface, so that the application node subsequently performs model training based on the plurality of downloaded augmented samples to obtain a recognition model, and deploys the recognition model to provide a service. The target interface is a software interface or a hardware interface for data exchange between the data augmentation system on the cloud and the application node.

In a possible implementation, the application node may alternatively directly download the target data augmentation policy through the target interface, parse the target data augmentation policy, and perform, based on the parsed target data augmentation policy, a plurality of data augmentation operations on the to-be-augmented sample to obtain a plurality of augmented samples.

In some embodiments, the first node includes a central processing unit (central processing unit, CPU), and the CPU implements steps performed by the first node. The first node includes a graphics processing unit (graphics processing unit, GPU), and the CPU implements steps performed by the second node.

In some embodiments, when the data augmentation system is not deployed on the cloud, the first node or the third node in the data augmentation system may alternatively generate a plurality of target data augmentation policies, where any target data augmentation policy is a data augmentation policy finally generated based on each data augmentation policy historically generated by the first node, and the any target data augmentation policy corresponds to one object type or one object. The node that generates the plurality of target data augmentation policies uploads each target data augmentation policy and an object type or an object identifier corresponding to each target data augmentation policy to the cloud, so that the application node downloads the corresponding target data augmentation policy from the cloud based on the to-be-augmented sample. Then, the application node may obtain, through the downloaded target data augmentation policy, a recognition model applicable to the to-be-augmented sample or the object. Alternatively, the first node may obtain one recognition model through training based on each target data augmentation policy, associate each recognition model with an object type or an object identifier corresponding to each target data augmentation policy, and upload the recognition model to the cloud. The application node directly downloads a required recognition model from the cloud based on a requirement of an application scenario. Alternatively, the first node may obtain one recognition model through training based on each target data augmentation policy, generate a plurality of augmented samples, and upload the plurality of augmented samples and a sample label of each augmented sample to the cloud, and the application node directly downloads each required augmented sample from the cloud based on a requirement of an application scenario.

In this application, the first node 101, the second node 102, and the third node 103 may be servers, and the application node may be a user equipment such as a terminal, a personal computer (personal computer, PC), or an application server. Implementation forms of the first node 101, the second node 102, the third node 103, and the application node are not limited in this embodiment of this application.

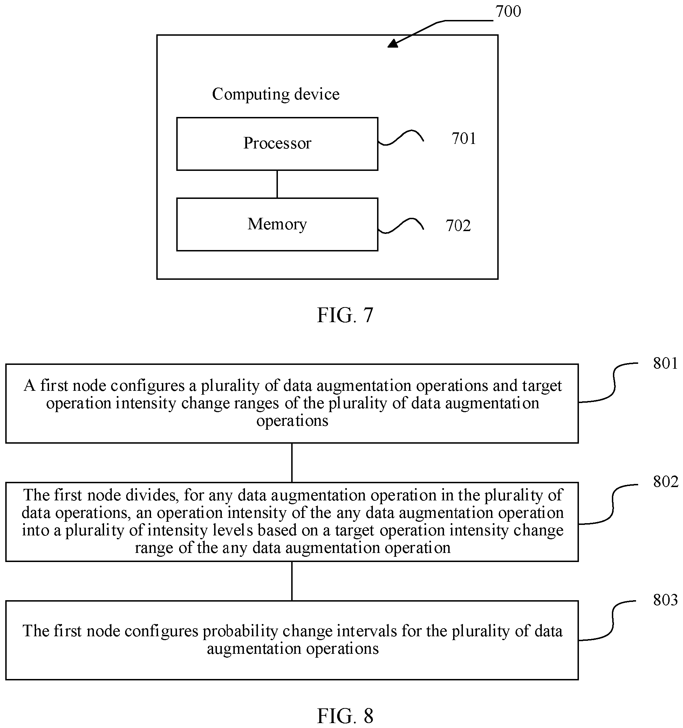

An embodiment of this application further provides a schematic diagram of a structure of a computing device. Referring to FIG. 7, the computing device 700 may be configured as any one of a first node, a second node, and a third node. The computing device 700 may differ greatly due to different configurations or performance, and may include one or more processors 701 and one or more memories 702. The memory 702 stores at least one instruction, the at least one instruction is loaded and executed by the processor 701 to implement a method provided in each of the following method embodiments. For example, if the computing device 700 is configured as a first node, the at least one instruction is loaded and executed by the processor 701, to implement steps performed by the first node in the following method embodiments. Certainly, the computing device 700 may further include components such as a wired or wireless network interface, a keyboard, and an input/output interface, to perform input/output. The computing device 700 may further include another component configured to implement a device function. Details are not described herein. The processor 701 may be any processor such as a CPU, a GPU, a tensor processing unit (tensor processing unit, TPU), a neural network processing unit (neural network processing unit, NPU), a brain processing unit (brain processing unit, BPU), a deep learning processing unit (deep learning processing unit, DPU), a holographic processing unit (holographic processing unit, HPU), a vector processing unit (vector processing unit, VPU), or an intelligence processing unit (intelligence processing unit, IPU).

The processor 701 may be a general-purpose CPU, a microprocessor, an application-specific integrated circuit (application-specific integrated circuit, ASIC), a GPU, or one or more integrated circuits, and is configured to execute a related program to implement the following data augmentation method.

Alternatively, the processor 701 may be an integrated circuit chip and has a signal processing capability. In an implementation process, steps performed by any node in the data augmentation method in this application may be completed through a hardware integrated logic circuit in the processor 701 or an instruction in a form of software. The processor 701 may alternatively be a general-purpose processor, a digital signal processor (digital signal processor, DSP), an ASI, a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and accomplished through a hardware decoding processor, or may be performed and accomplished through a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory 702. The processor 701 reads information in the memory 702, and completes, in combination with hardware of the processor, functions that need to be performed by modules included in a data augmentation apparatus in embodiments of this application, or performs the data augmentation method in method embodiments of this application.

In an example embodiment, a computer-readable storage medium, for example, a memory including an instruction is further provided. The instruction may be executed by a processor in a terminal to complete a data augmentation method in the following embodiments. For example, the computer-readable storage medium may be a ROM, a RAM, a compact disc read-only memory (compact disc read-only memory, CD-ROM), a magnetic tape, a floppy disk, or an optical data storage device.

For example, before obtaining an optimal data augmentation policy applied to an application scenario, a first node first performs the following initialization configuration for the application scenario. FIG. 8 is a flowchart of an initialization configuration according to an embodiment of this application.

801: A first node configures a plurality of data augmentation operations and target operation intensity change ranges of the plurality of data augmentation operations.

The plurality of data augmentation operations are data augmentation operations required by a sample in an application scenario. The application scenario is any one of an image recognition scenario, an audio/video scenario, or a text recognition scenario. This embodiment of this application imposes no limitation on the application scenario.

The sample includes data acquired in the application scenario, or it is considered that the sample includes real data. In this embodiment of this application, an example in which the application scenario is an image recognition scenario is used for description. The sample may be an image captured by any device that has a photographing function in the image recognition scenario.

To increase a quantity of existing samples, data augmentation may be performed on an existing sample through a data augmentation operation, to obtain an augmented sample, and the augmented sample is considered as real data acquired in the application scenario, to perform model training. However, various changes may exist between real data acquired in the application scenario. To enable a subsequently obtained augmented sample to highly simulate the real data in the application scenario, data augmentation needs to be performed on the existing sample through a plurality of data augmentation operations. For example, in the image recognition scenario, the plurality of data augmentation operations include at least one of a flip operation, a rotation operation, a zoom operation, a cropping operation, a translation operation, a noise addition operation, and a sharpening operation, and certainly, may further include another type of data augmentation operation. The plurality of data augmentation operations may be adaptively configured based on a specific application scenario. The plurality of data augmentation operations are not limited in this embodiment of this application herein.

It should be noted that a change of real data in the application scenario is a distribution rather than several specific change points. For example, when different persons photograph a same kitten, because the persons hold mobile phones in different postures, the kitten in captured images may change by infinite degrees of inclination and sizes, rather than only several specific degrees of inclination. Certainly, not only the degrees of inclination of the kitten in the images change, but also the images captured by the different mobile phones vary in terms of color saturation, color temperature, and the like. Therefore, to simulate a change of real data, data augmentation operations in different intensity change ranges need to be performed on the images, to obtain more augmented samples, and additionally, it is ensured that a change distribution of these augmented samples can be consistent with a change distribution of actual samples in the application scenario as much as possible. Therefore, in addition to a plurality of data augmentation operations, target operation intensity change ranges of the plurality of data augmentation operations are further configured in the first node, to make it convenient to subsequently perform each data operation on a sample in a target operation intensity change range of each data augmentation operation, so that each change range of a finally obtained augmented sample is within the target operation intensity change range of each data augmentation operation, to simulate a change distribution of real data in the application scenario.

A target operation intensity change range of a data augmentation operation includes a plurality of operation intensities. An operation intensity range of a target operation intensity change range of each data augmentation operation is not limited in this embodiment of this application, and may be adaptively configured based on an actual application scenario. An image recognition scenario is used as an example. A data augmentation operation is a rotation operation, and an operation intensity of the rotation operation may be represented by a rotation angle. If objects in a plurality of images in the image recognition scenario rotate, and a rotation range is [0 degrees, 180 degrees], a target operation intensity change range that may be configured by the first node for the rotation operation is [0 degrees, 180 degrees], so that a rotation operation is subsequently performed on the images in the image recognition scenario within a range of [0 degrees, 180 degrees], to obtain a plurality of data-augmented images (that is, a plurality of augmented samples). In addition, objects in the plurality of data-augmented images rotate in a range of [0 degrees, 180 degrees], so that the plurality of data-augmented images satisfy a change rule of a real image in the image recognition scenario. In this case, the plurality of pieces of data-augmented images may be used as real samples in the image recognition scenario, to perform model training.

In some embodiments, the first node configures, based on a manual operation, a plurality of data augmentation operations and a target operation intensity change range of the plurality of data augmentation operations. In a possible implementation, the first node displays a data augmentation operation configuration interface, and the user configures, in the data augmentation operation configuration interface, a plurality of data augmentation operations and a target operation intensity change range of each data augmentation operation. When it is detected that the user performs a confirmation operation on the data augmentation operation configuration interface, the first node stores a plurality of data augmentation operations configured by the user on the data augmentation operation configuration interface and a target operation intensity change range of each data augmentation operation, to complete the configuration.

In some embodiments, the process shown in step 801 is performed by an operation pool in the first node, for example, the operation pool 1011 in the first node 101 shown in FIG. 2.

It should be noted that step 801 is performed by the first node, and the first node may be considered as a configuration device. In some embodiments, step 801 is not performed by the first node, but is performed by any configuration device other than the first node.

802: The first node divides, for any data augmentation operation in the plurality of data operations, an operation intensity of the any data augmentation operation into a plurality of intensity levels based on a target operation intensity change range of the any data augmentation operation.

One intensity level indicates one intensity change interval. The intensity change interval may be any subset of the target operation intensity change range.

The first node divides the target operation intensity change range corresponding to the any data augmentation operation into a plurality of intensity change intervals, where no intersection exists between the plurality of intensity change intervals, and the first node configures an operation level for each of the plurality of operation intensity change intervals. An operation intensity in the plurality of intensity change intervals is positively correlated with an intensity level of the operation intensity change intervals. To be specific, in the plurality of intensity change intervals, an operation intensity change interval with a higher operation intensity has a higher intensity level; otherwise, has a lower intensity level.

For example, the any data augmentation operation is a rotation operation, and a target operation intensity change range of the rotation operation is [0 degrees, 180 degrees]. The first node divides the target operation intensity change range [0 degrees, 180 degrees] into 10 intensity change intervals being sequentially [0 degrees, 18 degrees), [18 degrees, 36 degrees), ..., and [162 degrees, 180 degrees]. Based on operation intensities in the 10 intensity change intervals, the first node sequentially configures intensity levels corresponding to the 10 intensity change intervals as intensity levels 1, 2, ..., and 10, and the 10 intensity levels increase sequentially.

In some embodiments, the process shown in step 802 is completed by the first node in a policy change space, for example, the policy change space 1012 in the first node 101 shown in FIG. 2.

It should be noted that step 802 is performed by the first node, and the first node may be considered as a configuration device. In some embodiments, step 802 is not performed by the first node, but is performed by any configuration device other than the first node.

803: The first node configures probability change intervals for the plurality of data augmentation operations.

One probability change interval includes a plurality of operation probabilities, and one operation probability of any data augmentation operation is a probability of performing the any data augmentation operation on a sample.

In some embodiments, the first node configures a same probability change interval for each of the plurality of data augmentation operations, or configures different probability change intervals for the plurality of data augmentation operations. The probability change intervals configured by the first node for the plurality of data augmentation operations is not limited in this embodiment of this application.

In some embodiments, the first node directly configures a same probability change interval, for example, [0, 1] for the plurality of data augmentation operations.

In some embodiments, the process shown in step 803 is completed by the first node in a policy change space, for example, the policy change space 1012 in the first node 101 shown in FIG. 2.

It should be noted that there is no sequence of performing step 803 and step 802. The first node may first perform step 803 and then perform step 802. A sequence of performing steps 802 and 803 is not limited in this embodiment of this application.

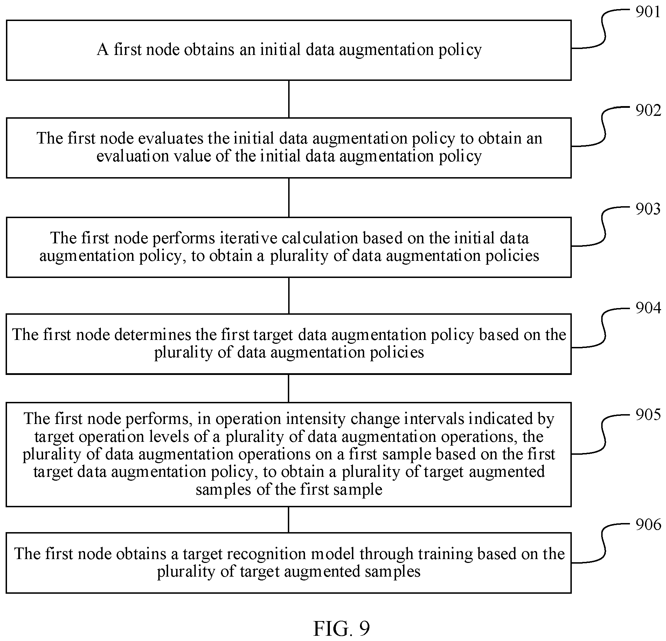

After the first node configures the intensity levels and the probability change intervals of the plurality of data augmentation operations, the initialization configuration is completed. In addition to changing the sample through the data augmentation operation alone, to increase sample diversity and simulate a data change in a real scenario, different data augmentation operations may be combined to form a plurality of data augmentation policies, to achieve more diversified data changes. In addition, the first node can further obtain the first target data augmentation policy based on the plurality of data augmentation policies, to subsequently increase a quantity of samples through the first target data augmentation policy. To further describe this process, refer to FIG. 9 that is a flowchart of a data augmentation method according to an embodiment of this application.

901: A first node obtains an initial data augmentation policy, where the initial data augmentation policy indicates operation probabilities and intensity levels of a plurality of data augmentation operations.

For example, each of the plurality of data augmentation operations may be identified through one operation identifier, and operation identifiers of different data augmentation operations are different. In a possible implementation, the initial data augmentation policy includes operation identifiers, operation probabilities, and intensity levels of the plurality of data augmentation operations, and an operation identifier of each data augmentation operation corresponds to an operation intensity and an operation probability of each data augmentation operation. In a possible implementation, a sum of operation probabilities of the plurality of data augmentation operations in the initial data augmentation policy is 1, each data augmentation operation in the initial data augmentation policy has at least one intensity level, and each type of data augmentation has one operation probability. It should be noted that in this embodiment of this application, an example in which each data augmentation operation in the initial data augmentation policy has one intensity level is used for description.

In some embodiments, there may be one or more initial data augmentation policies obtained by the first node. In this embodiment of this application, a quantity of initial data augmentation policies obtained by the first node is not limited. It should be noted that in this embodiment of this application, an example in which the first node obtains one initial data augmentation policy is used for description.

In a possible implementation, a process in which the first node obtains one initial data augmentation policy is: For any one of the plurality of configured data augmentation operations, the first node randomly selects one intensity level from a plurality of intensity levels of the configured any data augmentation operation, and randomly selects one operation probability from a probability change interval of the configured any data augmentation operation; and the first node generates one initial data augmentation policy based on the operation identifiers of the plurality of data augmentation operations, and the selected intensity level and operation probability of each of the plurality of data augmentation operations.

In some embodiments, the process shown in step 901 is performed by a policy optimizer in the first node, for example, the policy optimizer 1013 in the first node 101 shown in FIG. 2.

There are many types of data augmentation operations, and different combinations of different types of data augmentation operations are actually another form of data augmentation operations. Therefore, if needing to find a better data augmentation policy from the obtained plurality of data augmentation policies, the first node needs to evaluate each obtained data augmentation policy, to obtain a better data augmentation policy based on evaluation results of the obtained plurality of data augmentation policies. The initial data augmentation policy is a data augmentation policy obtained by the first node. In a possible implementation, the first node evaluates the initial data augmentation policy through the following step 902.

902: The first node evaluates the initial data augmentation policy, to obtain an evaluation value of the initial data augmentation policy, where the evaluation value of the initial data augmentation policy indicates a degree of quality of a recognition model obtained through training based on an augmented sample obtained based on the initial data augmentation policy.

The evaluation value of the initial data augmentation policy is a result of evaluation performed by the first node on the initial data augmentation policy. Optionally, the evaluation value of the initial data augmentation policy is precision of a recognition model obtained through training based on an augmented sample obtained based on the initial data augmentation policy.

The first node performs data augmentation on a sample in the application scenario through the initial data augmentation policy, performs model training based on an augmented sample obtained through the data augmentation, and evaluates quality of the initial data augmentation policy through a recognition model obtained through the training. In a possible implementation, the process shown in step 902 is implemented through processes shown in the following steps 9021 to 9023.

Step 9021: The first node performs the plurality of data augmentation operations on a plurality of second samples based on the operation probabilities and the operation levels of the plurality of data augmentation operations in the initial data augmentation policy, to obtain a plurality of augmented samples of the plurality of second samples.

For any one of the plurality of data augmentation operations in the initial data augmentation policy, the any data augmentation operation is performed on an augmented sample in the plurality of augmented samples based on an operation probability of the any data augmentation operation.

Each of the plurality of second samples includes data acquired in the application scenario. For any one of the plurality of second samples, the any second sample has one sample label, and the sample label of the any second sample indicates an object of the any second sample. Optionally, the sample label of the any second sample includes an object identifier, and the object identifier identifies an object of the any second sample. The object of the any second sample is an object that is acquired when the any second sample is acquired. For example, if the any second sample is an image of a cat, the cat is an object of the any second sample. In some embodiments, objects of the plurality of second samples are different, or objects of some of the plurality of second samples are different.

It should be noted that all samples in this application include data acquired in the application scenario, and are real data in the application scenario; and are, for example, the foregoing second sample, and the following first sample, third sample, and fourth sample. All augmented samples in this application are obtained by performing a data augmentation operation on real data in the application scenario, and are used to simulate the real data in the application scenario, to increase a quantity of samples in the application scenario.

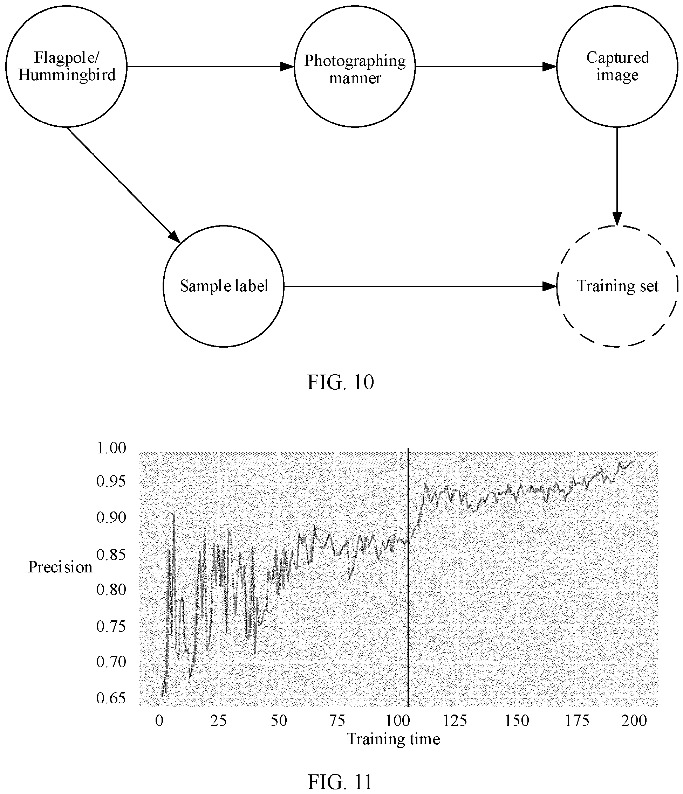

The samples or augmented samples in this application are finally used for model training, and a data change of the samples used for model training depends on a manner of generating these samples. For example, for a same cat photographed through different mobile phones, image attributes of captured images are different. For example, a color temperature of an image captured through a mobile phone is warm, but a color temperature of an image captured through another mobile phone is cold. In another example, when a static cat is photographed and a dynamic bird is photographed, image attributes of an image of the cat and an image of the bird are also definitely different. The image of the bird is blurred, and a camera may automatically add more sharpening operations. However, no sharpening operation needs to be automatically added to the image of the cat. For example, FIG. 10 is a schematic diagram of a causal relationship between a sample label, an object, and a photographing manner according to an embodiment of this application. A static flagpole and a dynamic hummingbird are used as objects, and determine different photographing manners and different sample labels of captured images. The different photographing manners determine different change distributions of the captured images. The captured images and the labels of the images form a training set for model training.

However, if an augmented sample having data that is generally distributed as similar as possible to real data needs to be generated through a data augmentation policy, impact brought by a sample generation manner needs to be considered, and then different data augmentation policies are calculated for different sample generation manners. A sample generation manner is generally related to a type of an object of a sample or an object of a sample. Therefore, in some embodiments, objects of the plurality of second samples belong to a same type. For example, all objects of the plurality of second samples are any one of an avian type, an amphibious type, or a reptilian type. Alternatively, in some embodiments, objects of the plurality of second samples are a same object. For example, objects of the plurality of second samples are all cats or birds. Optionally, a sample label of each second sample further includes a category identifier of an object of each second sample. If objects of the plurality of second samples belong to a same category, sample labels of the plurality of second samples include a same category identifier. For ease of description, a category to which objects of the plurality of second samples belong is denoted as a target category. If objects of the plurality of second samples are a same object, object identifiers included in sample labels of the plurality of second samples are the same.

In a possible implementation, for any one of the plurality of data augmentation operations in the initial data augmentation policy, the first node performs, based on an operation probability of the any data augmentation operation, the any data augmentation operation on the plurality of second samples in an operation intensity change interval indicated by an operation level of the any data augmentation operation, to obtain a plurality of augmented samples on which the any data augmentation operation is performed.

For any one of the plurality of second samples, a target quantity of required augmented samples of the any second sample is set in the first node, and the first node performs, based on the target quantity and the operation probability of the any data augmentation operation, the any data augmentation operation on the any second sample for a plurality of times in an operation intensity change interval indicated by an intensity level of the any data augmentation operation, to obtain a plurality of augmented samples, of the any second sample, on which the any data augmentation operation is performed. In the plurality of augmented samples of the any second sample, a quantity of augmented samples on which the any data augmentation operation is performed is a product of the target quantity and the operation probability of the any data augmentation operation.

For ease of understanding the process, that a quantity of the plurality of second samples is M and the initial data augmentation policy is the data augmentation policy shown in FIG. 3 is used as an example to describe step 9021 as follows: For a $j^{th}$ data augmentation operation in the S data augmentation operations in the initial data augmentation policy and an $r^{th}$ second sample in the plurality of second samples, if an operation probability of the $j^{th}$ data augmentation operation is 0.2, and a target quantity that is of required augmented samples of the $r^{th}$ second sample and that is set in the first node is 100, the first node performs the $j^{th}$ data augmentation operation for 20 times on the $r^{th}$ second sample in an intensity change interval indicated by an intensity level of the $j^{th}$ data augmentation operation in the initial data augmentation policy, to obtain 20 augmented samples of the $r^{th}$ second sample, where j is an integer greater than or equal to 1 or less than or equal to S, and r is an integer greater than or equal to 1 or less than or equal to M.

In a possible implementation, a process in which the first node performs the any data augmentation operation for a plurality of times on the any second sample in the operation intensity change interval indicated by the intensity level of the any data augmentation operation is: The first node performs, at an equal probability, the any data augmentation operation for a plurality of times on the any second sample based on an operation intensity in the operation intensity change interval indicated by the intensity level of the any data augmentation operation. For example, if the any data augmentation operation is a rotation operation, an operation intensity change interval corresponding to an intensity level of the rotation operation in the initial data augmentation policy is [0 degrees, 18 degrees), and 18 rotation operations need to be performed on the any second sample, the first node selects 18 rotation angles at an equal probability from the operation intensity change interval [0, 18 degrees) being respectively 0, 1 degree, ..., and 17 degrees, and the first node performs, based on each selected rotation angle, one rotation operation on the any second sample to obtain 18 augmented samples of the any second sample, so that a change distribution of the 18 augmented samples in the rotation angles is approximately [0, 18 degrees).

It should be noted that an object of each augmented sample obtained by performing the data augmentation operation on the any second sample is the same as an object of the any second sample, and the first node may use a sample label of the any second sample as a sample label of each augmented sample obtained by performing the data augmentation operation on the any second sample.

Step 9022: The first node performs training based on the plurality of augmented samples of the plurality of second samples to obtain an initial recognition model.

The initial recognition model is configured to recognize a sample. Optionally, the initial recognition model is a neural network model, for example, a deep neural network model.

In some embodiments, the first node inputs the plurality of augmented samples into an initial model, and performs model training on the initial model through the plurality of augmented samples, to obtain the initial recognition model. The initial model is a neural network model that is not trained.

In some other embodiments, the first node first obtains a pre-training model, and then trains the pre-training model based on the plurality of augmented samples, to obtain the initial recognition model. The pre-training model is obtained through training based on a plurality of third samples of a plurality of objects of different types, and precision of the pre-training model is less than a precision threshold. The precision threshold may be set based on an actual application scenario. The precision threshold is not limited in this embodiment of this application.

The plurality of third samples include data acquired in the application scenario. Because precision of the pre-training model is less than the precision threshold, it is considered that the pre-training model is a model on which training is not finished. In this case, the first node continues to train the pre-training model based on the plurality of augmented samples, to obtain the initial recognition model. A time for obtaining the pre-training model is much shorter than a time for training the initial model into the initial recognition model. Therefore, total duration of evaluating the initial data augmentation policy by the first node can be shortened, and evaluation efficiency of the data augmentation operation can be improved. For example, FIG. 11 is a curve diagram of a precision change of a recognition model in a training process according to an embodiment of this application. If the first node trains an initial model based on the plurality of augmented samples, and intends to obtain an initial recognition model with precision higher than 95%, training duration needs to be 200 minutes. If the first node first performs training to obtain a pre-training model in 115 minutes in advance, and then trains the pre-training model based on the plurality of augmented samples after obtaining the plurality of augmented samples, training duration of obtaining an initial recognition model with precision higher than 95% is 95 minutes, thereby significantly shortening duration occupied by model training in an evaluation process, and improving evaluation efficiency of a data augmentation operation.

For example, a process in which the first node obtains the pre-training model is: The first node trains the initial model based on the plurality of third samples, to obtain the pre-training model. Alternatively, the pre-training model is trained by another device other than the first node, and the first node obtains the pre-training model from the another device. A manner in which the first node obtains the pre-training model is not limited in this embodiment of this application. In addition, the first node needs to obtain the pre-training model only once, and does not need to obtain the pre-training model for a plurality of times.

The pre-training model obtained through training based on a plurality of third samples of different types of objects is applicable to augmented samples of different types of objects. Therefore, even if objects of the plurality of augmented samples belong to a same type or a same object, the first node can still obtain the initial recognition model by training the pre-training model based on the plurality of augmented samples. Because objects of the plurality of augmented samples belong to a same type or a same object, the initial recognition model obtained through training has a better recognition effect when recognizing an object of a target type or another sample of an object of the plurality of augmented samples.

Step 9023: The first node obtains an evaluation value of the initial data augmentation policy based on the initial recognition model.

For example, the first node tests the initial recognition model through a plurality of fourth samples, and obtains precision of the initial recognition model based on a test result. The first node obtains the precision of the initial recognition model as the evaluation value of the initial data augmentation policy. The plurality of fourth samples include data acquired in the application scenario. If object categories of the plurality of second samples are different, object categories of the plurality of fourth samples are different. If objects of the plurality of second samples all belong to the target category, objects of the plurality of fourth samples also belong to the target category. If objects of the plurality of second samples are a same object, objects of the plurality of fourth samples are the same as objects of the plurality of second samples. The initial recognition model is a recognition model obtained through training based on an augmented sample obtained based on the initial data augmentation policy, and precision of the initial recognition model is precision of correctly recognizing, by the initial recognition model, the objects of the plurality of fourth samples.

In a possible implementation, the first node inputs the plurality of fourth samples into the initial recognition model, and the initial recognition model recognizes each input fourth sample, and outputs a recognition result of each fourth sample. If an object indicated by a recognition result of a fourth sample is the same as an object indicated by a sample label of the fourth sample, the fourth sample is correctly recognized; otherwise, the fourth sample is incorrectly recognized. The first node collects statistics about a quantity of fourth samples correctly recognized by the initial model, and divides the quantity of correctly recognized fourth samples by a total quantity of the plurality of fourth samples, to obtain precision of the initial recognition model. The first node uses the precision as the evaluation value of the initial data augmentation policy.

In some embodiments, the first node uses the precision of the initial recognition model as the evaluation value of the initial data augmentation policy, or the first node can use another evaluation indicator of the initial recognition model as the evaluation value of the initial data augmentation policy, for example, a recall rate, an F1 value, or an area under the curve (area under the curve, AUC) value. The another evaluation indicator is not limited in this embodiment of this application.

In some embodiments, the process shown in step 902 is performed by a policy optimizer in the first node, for example, the policy optimizer 1013 in the first node 101 shown in FIG. 2.

903: The first node performs iterative calculation based on the initial data augmentation policy, to obtain a plurality of data augmentation policies.

Any data augmentation policy indicates an operation probability and an operation level of each of the plurality of data augmentation operations. The first node determines, in a process of $i^{th}$ time of iterative calculation, an $i^{th}$ data augmentation policy in the plurality of data augmentation policies based on a data augmentation policy determined in processes of previous $i - 1$ times of iterative calculation and each data augmentation policy in the initial data augmentation policy, where $i$ is an integer greater than or equal to 1 or less than or equal to $N$, and $N$ is a total quantity of times of iterative calculation. The $i^{th}$ data augmentation policy is a data augmentation policy determined by the first node in the process of the $i^{th}$ time of iterative calculation. The data augmentation policy determined in the process of the previous $i - 1$ times of iterative calculation and each data augmentation policy in the initial data augmentation policy are historical data augmentation policies determined by the first node at a current moment.

When $i$ is equal to 1, that is, in a process of the first time of iterative calculation, there is no processes of previous $i - 1$ times of iterative calculation. In this case, the first node determines the $i^{th}$ data augmentation policy in the plurality of data augmentation policies based on the initial data augmentation policy.

When $i$ is not equal to 1, there is the processes of previous $i - 1$ times of iterative calculation. In this case, the first node determines an $i - 1^{th}$ data augmentation policy in the plurality of data augmentation policies based on a data augmentation policy determined in processes of previous $i$ - 1 times of iterative calculation and each data augmentation policy in the initial data augmentation policy.

In the process of the $i$th time of iterative calculation, the first node can determine at least one $i$th data augmentation policy. In a process of determining one $i$th data augmentation policy, the first node first predicts an operation level and an operation probability of each data augmentation operation in the $i$th data augmentation policy, and then generates the $i$th data augmentation policy based on the predicted operation level and operation probability of each data augmentation operation in the $i$th data augmentation policy. In a possible implementation, the process of the $i$th time of iterative calculation is implemented through processes shown in the following steps 9031 to 9033.

Step 9031: For any one of the plurality of data augmentation operations, the first node predicts, based on a plurality of operation levels of the any data augmentation operation in the data augmentation policies and a plurality of evaluation values of the data augmentation policies, an operation level of the any data augmentation operation in the $i$th data augmentation policy, where an evaluation value of any data augmentation policy indicates a degree of quality of a recognition model obtained through training based on an augmented sample obtained based on the any data augmentation policy.

The data augmentation policies are the data augmentation policy determined in the process of the previous $i$ - 1 times of iterative calculation and data augmentation policies in the initial data augmentation policy, that is, historical data augmentation policies.

To enable each change distribution of the finally obtained augmented sample to comply with each change distribution of each sample acquired in the application scenario, a change distribution of each of the predicted operation intensity and operation probability of each data augmentation operation in the $i$th data augmentation policy needs to comply with the change distribution of each sample acquired in the application scenario. It is generally considered that each change distribution of each sample acquired in this application scenario complies with a normal distribution, that is, a Gaussian distribution. Optionally, the first node obtains, by fitting through the Gaussian distribution that the plurality of operation levels of each data augmentation operation in the data augmentation policies obey, a multivariate Gaussian distribution that the operation levels of each data augmentation operation in the data augmentation policies obey, to predict new operation levels of each data augmentation operation. The new operation levels of each data augmentation operation are operation levels of each data augmentation operation in the $i$th data augmentation policy.

In a possible implementation, step 9031 is implemented through the following steps A1 and A2.

Step A1: The first node determines, based on the plurality of operation levels and the plurality of evaluation values, a multivariate Gaussian distribution that the operation levels of the any data augmentation operation in the $i$th data augmentation policy obey.

The plurality of operation levels are in a one-to-one correspondence with the plurality of evaluation values, and any one of the plurality of operation levels corresponds to an evaluation value of a data augmentation policy to which the any operation level belongs. Each of the plurality of operation levels obeys one Gaussian distribution, and the Gaussian distribution that each operation level obeys is a value range of an evaluation value corresponding to each operation level. The evaluation value corresponding to each operation level is considered as a mean of the Gaussian distribution that each operation level obeys.

A Gaussian process is a generalization of a multivariate Gaussian probability distribution. It is first assumed that a prior distribution $p(f|X)$ exists in the intensity level of the any data augmentation operation in the plurality of data augmentation policies. Details are shown in Formula (1):

$$p(f|X) = \mathcal{N}(f|\mu, K) \quad (1)$$

$X$ is a set of intensity levels of any data augmentation operation in the plurality of data augmentation policies and is represented as $X = \{x_0, x_1, ..., x_{i-1}\}$, $x_0$ is an intensity level of the any data augmentation operation in the initial data augmentation policy, $x_1$ is an intensity level of the any data augmentation operation in the first data augmentation policy, and $x_{i-1}$ is an intensity level of the any data augmentation operation in the $i$ - 1th data augmentation policy; $f$ is a set of function values of a mapping function, and the mapping function is a function between an intensity level of the any data augmentation operation and an evaluation value of a data augmentation policy to which the any data augmentation operation belongs, or if it is considered that the evaluation value of the data augmentation policy to which the any data augmentation operation belongs is a function value of the mapping function, $f$ is represented as $f = \{f(x_0), f(x_1), ..., f(x_{i-1})\}$; and $\mu$ is a mean of $X$, $K$ is a covariance matrix formed by $k_{pq}$, where $k_{pq} = k(x_p, x_q)$ represents a similar distance (that is, a similarity) between $x_p$ and $x_q$ in $X$, $x_p$ is a $p$th intensity level in $X$, and $x_q$ is a $q$th intensity level in $X$, $0 \le p \le i - 1$, and $0 \le q \le i - 1$. Optionally, $k(x_p, x_q) = \exp(-\gamma \|x_p - x_q\|^2)$, where $\|x_p - x_q\|$ is a Euclidean distance between $x_p$ and $x_q$, and $\gamma$ is a smoothing factor, and is generally a decimal, to reduce adverse impact caused by an extreme value.

Because the Gaussian process is a set of random variables, and any finite quantity of random variables satisfy one joint Gaussian distribution, the first node determines, based on the plurality of operation levels and the plurality of evaluation values, that the plurality of operation levels and the operation levels of the any data augmentation policy in the $i$th data augmentation operation policy comply with a joint distribution shown in Formula (2):

$$\begin{pmatrix} Y \\ y_i^* \end{pmatrix} \sim \mathcal{N}\left( \begin{pmatrix} m(X) \\ m(x_i^*) \end{pmatrix}, \begin{pmatrix} K & K_* \\ K_*^T & K_{**} \end{pmatrix} \right) \quad (2)$$

$Y$ is a set of function values of an observed unknown function, that is, a set of evaluation values of historical data augmentation policies. In this case, $Y = \{f(x_0), f(x_1), ..., f(x_{i-1})\}$, where $y_i^*$ is an evaluation value of the predicted $i$th data augmentation policy, $x_i^*$ is an intensity level of the any data augmentation policy in the predicted $i$th data augmentation policy, $m(X)$ is a mean function of $X$, $m(x_i^*)$ is a mean function of a mean of $x_i^*$, $K_{**}$ is a similar distance between $x_i^*$ and $x_i^*$, $K_*$ is a similar distance between $x_i^*$ and each $x$ in $X$, and $K_*^T$ is a similar distance between each $x$ in $X$ and $x_i^*$.

The first node predicts, according to Formula (2), a multivariate Gaussian distribution that the operation levels of the any data augmentation operation in the $i$th data augmentation policy obey, that is, a value range of an evaluation value of the $i$th data augmentation policy. The multivariate Gaussian distribution $p(y_i^* \mid x_i^*, X, Y)$ that the operation levels of the any data augmentation operation in the predicted $i$th data augmentation policy obey is shown in Formula (3):

$$p(y_i^* \mid x_i^*, X, Y) = \mathcal{N}(y_i^* \mid \mu_*, \Sigma_*)$$
$$\mu_* = m(x_i^*) + K_*^T K^{-1}(Y - m(X))$$
$$\Sigma_* = K_{**} - K_*^T K^{-1} K_* \quad (3)$$

$\mu^*$ is a mean of the Gaussian distribution of the evaluation value of the predicted $i$th data augmentation policy, and $\Sigma_*$ is a variance of the Gaussian distribution of the evaluation value of the predicted $i$th data augmentation policy.

Step A2: Under the multivariate Gaussian distribution that the operation level of the any data augmentation operation obeys, the first node determines an operation level that enables an acquisition function to take a maximum value as the operation level of the any data augmentation operation in the $i$th data augmentation policy.

In a possible implementation, the acquisition function is represented by Formula (4):

$$\alpha(x) = \mu_* + \beta \Sigma_* \quad (4)$$

$\beta$ is a control factor. The first node substitutes the intensity levels of the any data augmentation operation in the historical data augmentation policies and the evaluation values of the historical data augmentation policies into Formula (4), to obtain function values of the acquisition function at the plurality of intensity levels of the configured any data augmentation operation. Because $x$ enabling the acquisition function to take a maximum value enables $y$ to take a maximum value with a higher probability, using, as $x_i^*$, $x$ enabling the acquisition function to take a maximum value enables $y_i^*$ to take a larger value. In this case, the first node determines, as an operation level of the any data augmentation operation in the $i$th data augmentation policy, an intensity level that enables the acquisition function to take a maximum value.

In some embodiments, the quantity of the plurality of intensity levels of the configured any data augmentation operation is large. To quickly determine, from the plurality of intensity levels of the configured any data augmentation operation, an intensity level enabling the acquisition function to take a maximum value, the first node calculates, through an optimization algorithm, an operation level that enables the acquisition function to take a maximum value. Optionally, the optimization algorithm is a quasi-Newton algorithm. The quasi-Newton algorithm is implemented by a python package: scipy. In a possible implementation, the first node invokes a scipy.optimize.minimize() function. Because the quasi-Newton algorithm is for solving a value $x$ corresponding to minimization, the first node inputs evaluation values of the data augmentation policies, operation levels of the any data augmentation operation in the historical data augmentation policies, and - $\alpha(x)$ into the scipy.optimize.minimizeQ function, to solve operation levels of the any data augmentation operation in the $i$th data augmentation policy.

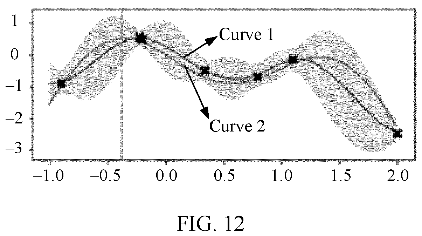

To further describe the process described in step 9031, refer to FIG. 12 showing a distribution fitting process of operation levels of data augmentation operations according to an embodiment of this application. It is assumed that a data augmentation policy to be searched for has only one random variable $x$, $x$ is an intensity level, and an evaluation value of the data augmentation policy corresponding to $x$ is $y$ (that is, $f(x)$). For any data augmentation operation, the first node first randomly selects $i$ intensity levels $x$ (black crosses in FIG. 12, that is, operation levels of any data augmentation operation in historical data augmentation policies). $y$ corresponding to each $x$ is understood as a probability distribution of a value $x$ (in FIG. 12, a curve 1 is an estimated mean curve of the probability distribution, a gray area is a probability distribution based on a specific mean, and a curve 2 is a function curve indicating a correspondence between an evaluated intensity level $x$ and an evaluation value $y$). Because a value $y$ corresponding to a black cross is a definite value, a variance of the value $y$ is very small. It can be learned that there is almost no gray area above and below the black cross.

For the curve 1 and the gray area in FIG. 12, it is assumed that when an intensity level x is selected, a value range of $y$ changes within a specific Gaussian distribution range, where a mean of the Gaussian distribution is a value with a highest probability of obtaining a value $y$, a probability of obtaining a value of a point $y$ greater than the mean decreases gradually, and a probability of obtaining the value of the point $y$ less than the mean also decreases gradually, that is, a value of $y$ corresponding to a value of each intensity level $x$ is such a Gaussian distribution differing in means and variances. The curve 1 is a curve formed by value distributions of $y$ corresponding to all intensity levels $x$, and the gray area is an area covered by a distance between an upper variance and a smaller variance of the mean of the distribution of the value $y$ corresponding to all intensity levels $x$. To be specific, values $y$ corresponding to different intensity levels $x$ appear in gray areas corresponding to the values, and appear on the curve 1 with a highest probability. For the black cross, because the intensity level $x$ and the value $y$ are determined, the value $y$ corresponding to the intensity level $x$ is definitely on a mean line shown by the curve 1. In addition, because it is determined that the variance of the value is very small, that is, a corresponding probability of taking a value other than the determined value for $y$ is very small, there is also almost no gray area near the black cross.

Because the value of $y$ corresponding to each intensity level $x$ is a Gaussian distribution, such a problem as "what value $y$ should be taken for $x$" may be modeled through a multivariate Gaussian distribution, that is, the black cross complies with the multivariate Gaussian distribution described in Formula (1), which is a multivariate Gaussian distribution formed based on $i$ known black crosses. However, when a distribution of values $y_i^*$ corresponding to an ($i$ + 1)th intensity level $x$ (that is, $x_i^*$) needs to be obtained, the first node estimates a distribution of corresponding $y_i^*$ through the multivariate Gaussian distribution shown in Formula (1), that is, obtains Formula (2). Then, for new $y_i^*,\ m(x_i^*),\ K_*^T$, $K^{-1}$, $K_{**}$, and the like can all be calculated. Therefore, through Formula (3), the first node can predict a probability distribution of values of $y_i^*$ corresponding to a new point $x_i^*$. $x_i^*$ is a value $x$ corresponding to a maximum value of the acquisition function $\alpha(x)$ shown in Formula (4), where $\beta$ is a control factor, and is for controlling a proportion of a value of $y_i^*$ in a variance range. When $\beta = 0$, the first node only takes a value $x$ that makes a mean in the value distribution $y_i^*$ largest, and ignores a possibility of taking a larger value of $y_i^*$ in the variance range. Larger $\beta$ indicates that the first node more considers a possibility of taking a larger value of $y_i^*$ in the variance range. Subsequently, the first node can continue evaluating, based on determined $x_i^*$, to obtain a real value of corresponding $y_i^*$, and a pair of known values $x$ and $y$ is added again. In this way, a value $y$ calculated by the first node through the multivariate Gaussian distribution is increasingly accurate, and a higher value of $y$ is more likely to be obtained based on estimated $x^*$. Through continuous iteration, the first node can obtain a value of $x$ corresponding to an increasingly high value of $y$. A value of $x$ corresponding to a highest value of $y$ is $x$ intended to be obtained, that is, an optimal intensity level of the any numerical augmentation operation.

Step 9032: For the any data augmentation operation, the first node predicts, based on a plurality of operation probabilities of the any data augmentation operation in the data augmentation policies and a plurality of evaluation values of the data augmentation policies, an operation probability of the any data augmentation operation in the $i^{th}$ data augmentation policy.

The first node obtains, by fitting through the Gaussian distribution that the plurality of operation probabilities of each data augmentation operation in the data augmentation policies obey, a multivariate Gaussian distribution that the operation probabilities of each data augmentation operation in the data augmentation policies obey, to predict new operation probabilities of each data augmentation operation. The new operation probabilities of each data augmentation operation are operation probabilities of each data augmentation operation in the $i^{th}$ data augmentation policy.

In a possible implementation, step 9032 is implemented through the following steps B1 and B2.

Step B1: The first node determines, based on the plurality of operation probabilities and the plurality of evaluation values, a multivariate Gaussian distribution that the operation probability of the any data augmentation operation obeys.

The process shown in step B1 is similar to the process shown in step A1. A difference lies in that in step B1, the operation probability of the any data augmentation operation is used as a random variable $x$, while in step A1, the operation intensity of the any data augmentation operation is used as a random variable $x$. The process shown in step B1 is not described in this embodiment of this application.

Step B2: Under the multivariate Gaussian distribution that the operation probability of the any data augmentation operation obeys, the first node determines an operation probability that enables an acquisition function to take a maximum value as the operation probability of the any data augmentation operation in the $i^{th}$ data augmentation policy.

The process shown in step B2 is similar to the process shown in step A2. A difference lies in that in step B2, the operation probability of the any data augmentation operation is used as a random variable $x$, while in step A2, the operation intensity of the any data augmentation operation is used as a random variable $x$. The process shown in step B2 is not described in this embodiment of this application.

Step 9033: The first node generates the $i^{th}$ data augmentation policy based on the predicted operation levels and operation probabilities of the plurality of data augmentation operations.

The first node performs the processes shown in the foregoing steps 9031 and 9032 on each of the plurality of data augmentation operations, so that the first node can obtain the predicted operation levels and operation probabilities of the plurality of data augmentation operations. After the first node predicts the operation levels and the operation probabilities of the plurality of data augmentation operations, the first node packages the operation identifiers of the plurality of data augmentation operations, and the predicted operation levels and operation probabilities of the plurality of data augmentation operations into the $i^{th}$ data augmentation policy.

After the first node determines the $i^{th}$ data augmentation policy, the first node further needs to obtain the evaluation value of the $i^{th}$ data augmentation policy. The first node performs data augmentation on a sample in the application scenario through the $i^{th}$ data augmentation policy, performs model training based on an augmented sample obtained through the data augmentation, and evaluates quality of the $i^{th}$ data augmentation policy through a recognition model obtained through the training. A process in which the first node obtains the evaluation value of the $i^{th}$ data augmentation policy is implemented through a process described in the following steps C1 to C3.

Step C1: The first node performs the plurality of data augmentation operations on a plurality of second samples based on the operation probabilities and the operation levels of the plurality of data augmentation operations in the $i^{th}$ data augmentation policy, to obtain a plurality of augmented samples of the plurality of second samples.

A process shown in step C1 is the same as a process shown in step 9011. Step C1 is not described in detail in this embodiment of this application.

Step C2: The first node obtains an $i^{th}$ recognition model through training based on the plurality of augmented samples.

The $i^{th}$ recognition mode is a recognition model obtained through training based on an augmented sample obtained based on the $i^{th}$ data augmentation policy. A process shown in step C2 is the same as a process shown in step 9022. Step C2 is not described in detail in this embodiment of this application.

Step C3: The first node obtains an evaluation value of the $i^{th}$ data augmentation policy based on the $i^{th}$ recognition model.

A process shown in step C3 is the same as a process shown in step 9023. Step C3 is not described in detail in this embodiment of this application.

After the first node obtains the evaluation value of the $i^{th}$ data augmentation policy, if a data augmentation policy determined in processes of previous $i$ times of iteration satisfies a preset condition, the first node terminates iterative calculation; otherwise, the first node enters a process of the $(i+1)^{th}$ iterative calculation. The preset condition includes at least one of the following: A total quantity of data augmentation policies determined in the processes of previous $i$ times of iteration reaches a target quantity; and an average evaluation value of data augmentation policies determined in the processes of previous $i$ times of iteration reaches a target evaluation value.

If the total quantity of data augmentation policies determined in the processes of previous *i* times of iteration reaches the target quantity, it indicates that the first node determines sufficient data augmentation policies. If the average evaluation value of data augmentation policies determined in the processes of previous *i* times of iteration reaches the target evaluation value, it indicates that the data augmentation policies determined in the processes of previous *i* times of iteration are sufficiently high in quality. When the data augmentation policies are sufficiently large in quantity and/or sufficiently high in quality, the first node terminates iterative calculation.

It should be noted that a process shown in step 903 is a process in which the first node obtains the plurality of data augmentation policies. In some embodiments, the process shown in step 903 is performed by a policy optimizer in the first node, for example, the policy optimizer 1013 in the first node 101 shown in FIG. 2.

904: The first node determines the first target data augmentation policy based on the plurality of data augmentation policies, where the first target data augmentation policy includes a target operation probability and a target operation level of each of the plurality of data augmentation operations.

The first target data augmentation policy is an optimal data augmentation policy finally determined by the first node.

In a possible implementation, the first node uses a data augmentation policy with a highest evaluation value in the plurality of data augmentation policies as the first target data augmentation policy. Because the plurality of data augmentation policies are all obtained through searching based on the plurality of operation levels of the plurality of configured data augmentation operations, and in this case, the first target data augmentation policy is one of the plurality of data augmentation policies, the first target data augmentation policy is also obtained through searching based on the plurality of operation levels of the plurality of configured data augmentation operations.

In another possible implementation, the first node first selects some data augmentation policies from the plurality of data augmentation policies, and then determines the first target data augmentation policy based on the selected data augmentation policies. Optionally, the process shown in step 904 is implemented through processes shown in the following steps 9041 and 9042.

Step 9041: The first node selects a plurality of second target data augmentation policies from the plurality of data augmentation policies based on evaluation values of the plurality of data augmentation policies, where evaluation values of the plurality of second target data augmentation policies are all greater than evaluation values of data augmentation policies in the plurality of data augmentation policies other than the plurality of second target data augmentation policies.

For example, the first node sorts the evaluation values of the plurality of data augmentation policies, and determines the second target data augmentation policies in the plurality of data augmentation policies based on a sorting result.

In a possible implementation, the first node sorts the evaluation values of the plurality of data augmentation policies in descending order of the evaluation values, to obtain a first evaluation value sequence. The first node uses evaluation values that are in the first evaluation value sequence and that are ranked in top target locations as evaluation values of the second target data augmentation policies, so that the first node selects the plurality of second target data augmentation policies from the plurality of data augmentation policies.

In a possible implementation, the first node sorts the evaluation values of the plurality of data augmentation policies in ascending order of the evaluation values, to obtain a second evaluation value sequence. The first node uses evaluation values that are in the second evaluation value sequence and that are ranked in bottom target locations as evaluation values of the second target data augmentation policies, so that the first node selects the plurality of second target data augmentation policies from the plurality of data augmentation policies.

The target location is an integer greater than 1. The quantity of target locations is not limited in this embodiment of this application.

Step 9042: The first node generates the first target data augmentation policy based on the plurality of second target data augmentation policies.

In a possible implementation, the process shown in step 9042 is implemented through processes shown in the following steps D1 and D2.

Step D1: The first node determines target operation probabilities and target operation levels of the plurality of data augmentation operations based on the operation probabilities and the operation levels of the plurality of data augmentation operations in the plurality of second target data augmentation policies.

The first node determines a target operation probability and a target operation level of any data augmentation operation based on a clustering result of intensity levels of the any data augmentation operation. In a possible implementation, step D1 is implemented through processes shown in the following steps D11 and D12.

Step D11: For any one of the plurality of data augmentation operations, the first node clusters a plurality of operation levels of the any data augmentation operation in the plurality of second target data augmentation policies, to obtain at least one operation level category.

In a possible implementation, the first node clusters, based on a density clustering algorithm, a plurality of operation levels of the any data augmentation operation in the plurality of second target data augmentation policies, to obtain the at least one operation level category, where one operation level category includes at least one operation level of the any data augmentation operation.

Optionally, the density clustering algorithm is density-based spatial clustering of applications with noise (density-based spatial clustering of applications with noise, DBSCAN). The DBSCAN is a density-based spatial clustering algorithm, and can divide a region with sufficient density into clusters and discover a cluster of any shape in a spatial database with noise, where the cluster is a maximal set of density-connected points (that is, operation levels), and an operation level of any data augmentation operation in an operation level category is a cluster.

For example, there are five intensity levels of the any data augmentation operation in the plurality of second target data augmentation policies being intensity levels 1, 3, 5, 6, and 7 respectively. The first node clusters the five intensity levels through the DBSCAN, to obtain operation level categories (that is, clusters) 1 and 2. The operation level category 1 includes the intensity levels 1 and 3, and the operation level category 2 includes the intensity levels 5, 6, and 7.

It should be noted that the first node may alternatively cluster the plurality of operation levels of the any data augmentation operation through a clustering algorithm of another type other than the DBSCAN. The clustering algorithm of the another type other than the DBSCAN is not limited in this embodiment of this application.

Step D12: For any one of the at least one operation level category, the first node determines, based on an operation level of the any operation level category and an operation probability of the any data augmentation operation in a third target data augmentation policy in the plurality of second target data augmentation policies, a target operation intensity and a target operation probability of the any data augmentation operation, where the third target data augmentation policy is a second target data augmentation policy to which the operation level of the any operation level category belongs.

In a possible implementation, the first node determines a target operation level of the any data augmentation operation based on the operation level of the any operation level category.

In some embodiments, the first node determines a minimum operation level and a maximum operation level in the any operation level category; and determines each operation level that is greater than or equal to the minimum operation level and that is less than or equal to the maximum operation level as the target operation level of the any data augmentation operation. The foregoing operation level category 1 is used as an example. In the operation level category 1, a minimum operation level is the operation level 1, and a maximum operation level is the operation level 3. In this case, operation levels that are greater than or equal to the minimum operation level and less than or equal to the maximum operation level include the operation levels 1, 2, and 3, and the first node determines the operation levels 1 to 3 as the target operation levels of the any data augmentation operation.

In some embodiments, the first node determines each operation level in the any operation level category as the target operation level of the any data augmentation operation. Using the foregoing operation level category 1 as an example, the first node determines the operation level 1 and the operation level 3 in the operation level category 1 as the target operation levels of the any data augmentation operation.

In a possible implementation, the first node determines the target operation probability of the any data augmentation operation based on the operation probability of the any data augmentation operation in the third target data augmentation policy in the plurality of second target data augmentation policies.

Optionally, the first node determines an average probability of operation probabilities of the any data augmentation operation in the third target data augmentation policy in the plurality of second target data augmentation policies as the target operation probability of the any data augmentation operation. For example, if the operation level 1 includes the operation levels 1 and 3, an operation probability of the any data augmentation operation in the data augmentation policy to which the operation level 1 belongs is 0.6, and an operation probability of the any data augmentation operation in the data augmentation policy (that is, the third target data augmentation policy) to which the operation level 3 belongs is 0.4, when the target operation levels are the operation levels 1 and 3, the target operation probability of the any data augmentation operation is an average probability 0.5 between 0.6 and 0.4.

Optionally, a product of the target operation probability and the quantity of operation levels in the any operation level category is a sum of operation probabilities corresponding to all operation levels in the any operation level category, and an operation probability corresponding to an operation level is an operation probability of the any data augmentation operation in the data augmentation policy to which the operation level belongs. For example, if the operation level 1 includes the operation levels 1 and 3, an operation probability of the any data augmentation operation in the data augmentation policy to which the operation level 1 belongs is 0.6, and an operation probability of the any data augmentation operation in the data augmentation policy to which the operation level 3 belongs is 0.3, an operation probability corresponding to the operation level 2 is 0 by default when target operation levels are the operation levels 1, 2, and 3 and the operation level 2 belongs to any data augmentation policy. In this case, the target operation probability of the any data augmentation operation = (0.6 + 0.3)/3 = 0.3.

Step D2: The first node generates the first target data augmentation policy based on the determined target operation probabilities and target operation levels of the plurality of data augmentation operations.

For example, the first node packages the operation identifiers, the target operation probabilities, and the target operation probabilities of the plurality of data augmentation operations into the first target data augmentation policy.

It should be noted that a process shown in step 904 is a process in which the first node obtains the first target data augmentation policy.

In some embodiments, the process shown in step 904 is performed by a policy optimizer in the first node, for example, the optimal policy generator 1014 in the first node 101 shown in FIG. 2.

905: The first node performs, in operation intensity change intervals indicated by target operation levels of a plurality of data augmentation operations, the plurality of data augmentation operations on a first sample based on the first target data augmentation policy, to obtain a plurality of target augmented samples of the first sample.

The first sample is a sample including data acquired in the application scenario. In some embodiments, an object of the first sample and an object of the second sample belong to a same category, or an object of the first sample and an object of the second sample are a same object. In some other embodiments, the object of the first sample and the object of the second sample belong to different categories. This embodiment of this application is described through an example in which the object of the first sample and the object of the second sample belong to a same category. In other words, the object of the first sample belongs to the target category.

Before performing step 903, the first node may further obtain the first sample. For example, in the cloud scenario shown in FIG. 6, the first node obtains, through the target interface, the first sample uploaded by the application node. Certainly, in some embodiments, the first sample may alternatively be a sample locally stored in the first node, and the first node obtains the first sample from locally stored samples.

The first node performs the plurality of data augmentation operations on the first sample based on the target operation probability and the target operation level of each of the plurality of data augmentation operations in the first target data augmentation policy, to obtain the plurality of target augmented samples. Any data augmentation operation is performed on a target augmented sample in the plurality of target augmented samples based on a target operation probability of the any data augmentation operation.

For the any data augmentation operation, the first node performs, based on the target operation probability of the any data augmentation operation, the any data augmentation operation on the first sample in an operation intensity change interval indicated by the target operation level of the any data augmentation operation, where this process is similar to that in step 9021 in which the first node performs, based on an operation probability of the any data augmentation operation, the any data augmentation operation on the plurality of second samples in an operation intensity change interval indicated by an operation level of the any data augmentation operation. This process is not described herein again in this embodiment of this application.

In some embodiments, the process shown in step 905 is performed by a policy optimizer in the first node, for example, the optimal policy generator 1014 in the first node 101 shown in FIG. 2.

906: The first node obtains a target recognition model through training based on the plurality of target augmented samples.

The target recognition model is a model that is finally for recognizing a sample in the application scenario. After obtaining the target recognition model, the first node associatively stores the target recognition model and a type identifier of the target type, so that the target recognition model is subsequently for recognizing a sample of an object of the target type.

A process shown in step 906 is similar to a process in step 9022 in which the first node obtains the initial recognition model through training based on the plurality of augmented samples of the plurality of second samples. Details about step 906 are not described in this embodiment of this application. In some embodiments, the process shown in step 906 is performed by a policy optimizer in the first node, for example, the optimal policy generator 1014 in the first node 101 shown in FIG. 2.

It should be noted that in a cloud scenario, for example, the cloud scenario shown in FIG. 6, after the first node obtains the first target data augmentation policy, the first node may further send the plurality of target augmented samples to the application node through the target interface, and the application node performs the process shown in step 906.

According to the data augmentation method provided in this embodiment of this application, a sample is processed through a plurality of data augmentation operations in the data augmentation policy, so that a plurality of target augmented samples can be obtained, thereby increasing a quantity of samples. In addition, because the plurality of data augmentation operations are performed on the sample within an operation intensity change interval indicated by the target operation levels of the plurality of data augmentation operations, the plurality of obtained target augmented samples can change within the operation intensity change interval indicated by the target operation levels of the plurality of data augmentation operations, thereby improving sample diversity.

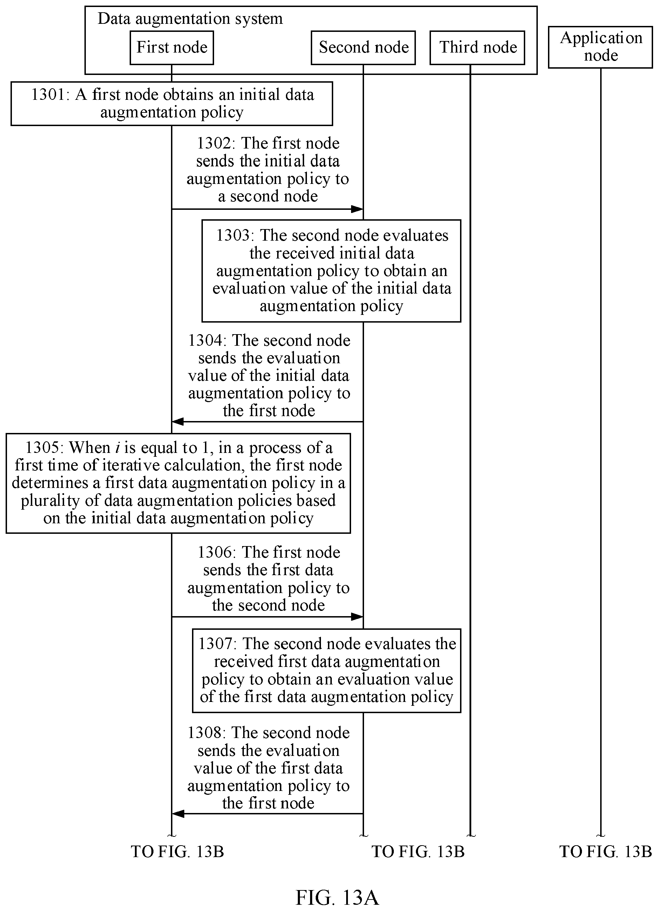

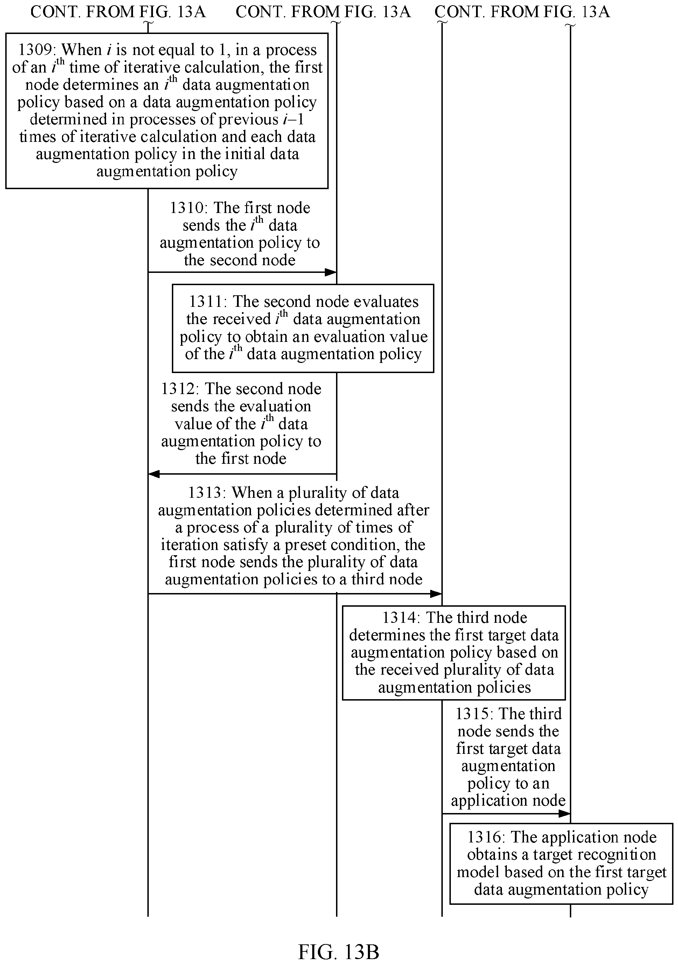

The foregoing process shown in FIG. 9 is a process in which the first node independently completes data augmentation when the first node has functions of nodes in the data augmentation system. In some other embodiments, a data augmentation process is jointly completed by nodes in a data augmentation system. To further describe this process, refer to FIG. 13A and FIG. 13B that are a flowchart of a data augmentation method according to an embodiment of this application.

1301: A first node obtains an initial data augmentation policy.

A process shown in step 1301 is the same as a process shown in step 901. Step 1301 is not described in detail in this embodiment of this application.

In some embodiments, the process shown in step 904 is performed by a policy optimizer in the first node, for example, the policy optimizer 1013 in the first node 101 shown in FIG. 2.

1302: The first node sends the initial data augmentation policy to a second node.

1303: The second node evaluates the received initial data augmentation policy to obtain an evaluation value of the initial data augmentation policy.

A process shown in step 1303 is the same as a process shown in step 902. Step 1303 is not described in detail in this embodiment of this application.

1304: The second node sends the evaluation value of the initial data augmentation policy to the first node.

1305: When $i$ is equal to 1, in a process of a first time of iterative calculation, the first node determines a first data augmentation policy in a plurality of data augmentation policies based on the initial data augmentation policy.

A process shown in step 1305 is the same as processes shown in steps 9031 to 9033. Step 1305 is not described in detail in this embodiment of this application.

1306: The first node sends the first data augmentation policy to the second node.

1307: The second node evaluates the received first data augmentation policy to obtain an evaluation value of the first data augmentation policy.

A process shown in step 1307 is the same as a process shown in step 902. Step 1307 is not described in detail in this embodiment of this application. In some embodiments, the process shown in step 904 is performed by a policy optimizer in the first node, for example, the policy optimizer 1013 in the first node 101 shown in FIG. 2.

1308: The second node sends the evaluation value of the first data augmentation policy to the first node.

1309: When $i$ is not equal to 1, in a process of an $i^{th}$ time of iterative calculation, the first node determines an $i^{th}$ data augmentation policy based on a data augmentation policy determined in processes of previous $i - 1$ times of iterative calculation and each data augmentation policy in the initial data augmentation policy.

A process shown in step 1309 is the same as processes shown in steps 9031 to 9033. Step 1309 is not described in detail in this embodiment of this application. In some embodiments, the process shown in step 904 is performed by a policy optimizer in the first node, for example, the policy optimizer 1013 in the first node 101 shown in FIG. 2.

1310: The first node sends the $i^{th}$ data augmentation policy to the second node.

1311: The second node evaluates the received $i^{th}$ data augmentation policy to obtain an evaluation value of the $i^{th}$ data augmentation policy.

A process shown in step 1311 is the same as a process shown in step 902. Step 1311 is not described in detail in this embodiment of this application.

1312: The second node sends the evaluation value of the $i^{th}$ data augmentation policy to the first node.

For the processes shown in steps 1309 to 1312, in some embodiments, after the first node obtains a plurality of data augmentation policies in each iteration process, the first node sends the plurality of data augmentation policies to different second nodes, and the different second nodes evaluate the different data augmentation policies, to implement distributed evaluation.

In a possible implementation, if the first node obtains a plurality of $i^{th}$ data augmentation policies, the first node sends at least one $i^{th}$ data augmentation policy to each of a plurality of second nodes, and each second node evaluates each received $i^{th}$ data augmentation policy based on a process shown in the following step 1311, so that the first node subsequently receives an evaluation value of the at least one $i^{th}$ data augmentation policy from each of the plurality of second nodes. In this case, the second node is an evaluation device, and is configured to evaluate a data augmentation policy sent by the first node.

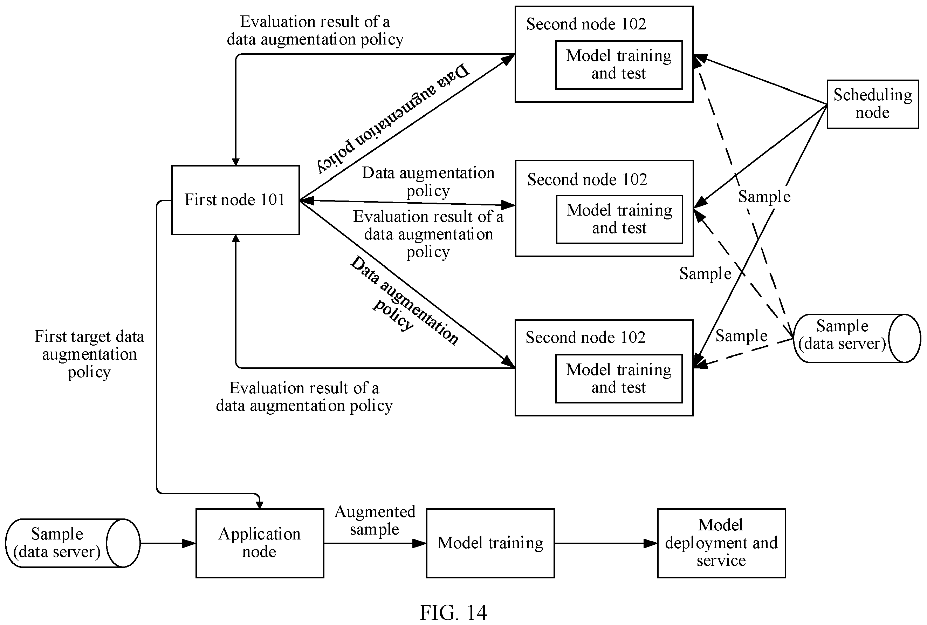

For example, FIG. 14 is a schematic diagram of a data augmentation system according to an embodiment of this application. Whenever generating a data augmentation policy, a first node sends the data augmentation policy to a second node. The second node performs, through the received data augmentation policy, data augmentation on a sample obtained from a data server, to obtain a plurality of augmented samples, obtains a recognition model through training based on the plurality of augmented samples and tests the recognition model, and returns an evaluation value of the data augmentation policy to the first node.

In some embodiments, a scheduling node is further disposed in the data augmentation system. Whenever the second node evaluates a data augmentation policy, the second node sends an evaluation value of the data augmentation policy to the scheduling node. If the evaluation value of the data augmentation policy is less than a target evaluation value, it is considered that the data augmentation policy is not good, and the scheduling node indicates the second node not to return the evaluation value of the data augmentation policy to the first node. Then, if the first node unsuccessfully receives the evaluation value of the data augmentation policy from the second node, the first node discards the data augmentation policy, so that evaluation values of a plurality of data augmentation policies finally determined by the first node subsequently are all greater than or equal to the target evaluation value, that is, the plurality of data augmentation policies finally determined by the first node are all good. In some embodiments, after the second node receives a data augmentation policy, if the scheduling node has not obtained an evaluation value of the data augmentation policy for a long time, it is considered that a problem occurs in a process of evaluating the data augmentation policy by the second node. For example, if the second node has not obtained a recognition model for a long time through training based on an augmented sample obtained based on the data augmentation policy, the scheduling node indicates the second node to end the process of evaluating the data augmentation policy, and perform a process of evaluating a next data augmentation policy. The scheduling node is, for example, a scheduling node in FIG. 14.

1313: When a plurality of data augmentation policies determined after a process of a plurality of times of iteration satisfy a preset condition, the first node sends the plurality of data augmentation policies to a third node.

In some embodiments, the first node does not send the plurality of data augmentation policies to the third node only after obtaining the plurality of data augmentation policies. Instead, whenever obtaining one data augmentation policy, the first node sends the data augmentation policy to the third node. An occasion for sending the plurality of data augmentation policies to the third node by the first node is not limited in this embodiment of this application.

In some embodiments, in addition to sending the plurality of data augmentation policies to the third node, the first node further sends the initial data augmentation policy to the third node.

1314: The third node determines the first target data augmentation policy based on the received plurality of data augmentation policies.

A process shown in step 1314 is the same as a process shown in step 904. Step 1314 is not described in detail in this embodiment of this application.

1315: The third node sends the first target data augmentation policy to an application node.

1316: The application node obtains a target recognition model based on the first target data augmentation policy.

In a possible implementation, the application node performs, based on the first target data augmentation policy, a plurality of data augmentation operations on a first sample to obtain a plurality of target augmented samples of the first sample, and the application node performs training based on the plurality of target augmented samples of the at least one first sample to obtain the target recognition model. This process is similar to the processes shown in steps 905 and 906. Step 1316 is not described in detail in this embodiment of this application.

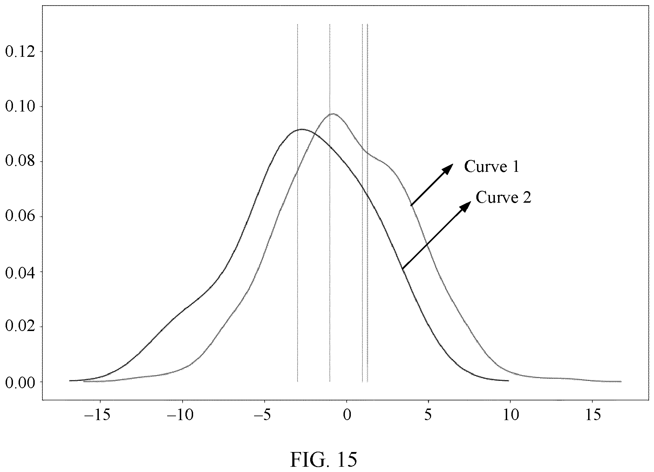

Because there may be a plurality of target intensity levels of any data augmentation operation in the first target data augmentation policy, and each target intensity level corresponds to one intensity change interval, a change distribution is presented between augmented samples obtained based on the first target data augmentation policy. For example, FIG. 15 is a schematic diagram of a data change distribution according to an embodiment of this application. In FIG. 15, a horizontal axis is rotation angles of rotation operations, a vertical axis is proportions of augmented samples obtained by performing rotation operations at different rotation angles on a plurality of augmented samples, a distribution formed by a curve 1 is a change distribution of real data in the application scenario, and a distribution formed by a curve 2 is a change distribution of data of an augmented sample obtained through the first target data augmentation operation, and a vertical line in FIG. 15 is a change distribution of data of an augmented sample obtained through a data augmentation policy provided by a related technology. It can be learned from FIG. 15 that the vertical line can cover only a very small part of the change distribution of the real data in the application scenario, while the change distribution of the data of the augmented sample obtained through the first target data augmentation operation can cover a larger range of the change distribution of the real data. Therefore, an augmented sample subsequently generated based on the first target data augmentation policy can better simulate real data, and a recognition model obtained through training based on an augmented sample obtained through the first target data augmentation policy has a stronger generalization capability, and can better adapt to a real application scenario.

In addition, in an image application scenario, a change distribution of a data augmentation operation in the first target data augmentation policy may alternatively be represented as a change distribution of pixel values of an augmented sample. For example, the data augmentation operation is a sharpening operation. When the sharpening operation is performed, color contrasts on two sides of a contour of an outline-related part of an object in an image (sample) are improved. For example, if a sample is an image of a bird, after a strong sharpening operation is performed on the image, using pixels near a bird mouth in an image (an augmented sample) obtained after the strong sharpening operation as an example, a black-and-white comparison near the bird mouth in the original image is not strong, and a black-and-white comparison near the bird mouth in the image obtained after the strong sharpening operation is strong, and these comparisons may be reflected in a change of each related pixel. Furthermore, because all pixels are each formed by a triplet of red, green, and blue (red, green, blue, RGB), and the triplet includes three changing numbers that range from 0 to 256 and respectively represent intensities of such three colors as red, green, and blue at a location of the pixel, the change distribution of the data augmentation operation may be represented as a change distribution of pixel values of the augmented sample.

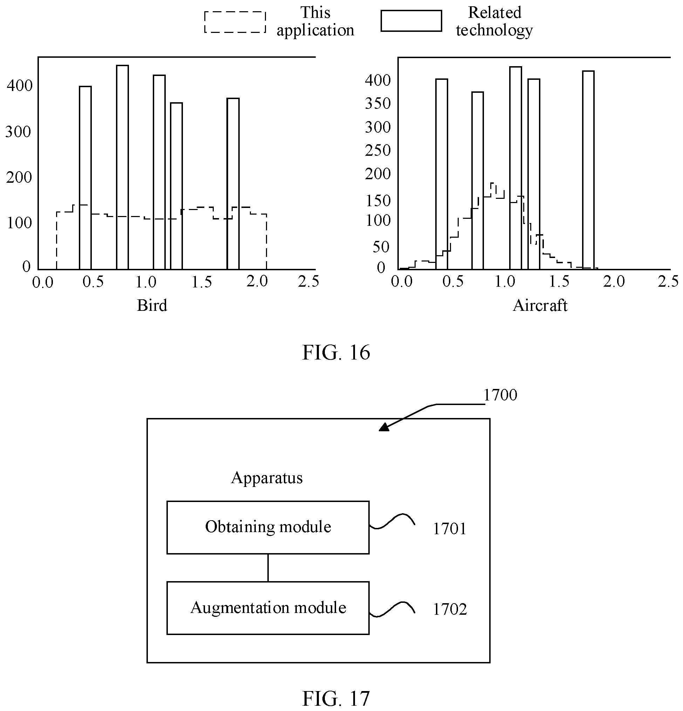

For example, FIG. 16 is a schematic diagram of a distribution of changes of specific pixel values during a change of a sharpening operation according to an embodiment of this application. Using a sharpening operation as an example, FIG. 16 shows a change distribution of a value of a specific pixel in an image augmented through the data augmentation method in this application, and shows a change distribution of a value of the specific pixel in such an image augmented through the sharpening operation provided in the related technology. A horizontal axis is values of the specific pixel after performing data augmentation on the image into several augmented images (each value on the horizontal axis is multiplied by 100 to present a comparison effect due to a drawing reason). A vertical axis is quantities of augmented images with the values taken on the specific pixel after performing data augmentation on the image into several augmented images, that is, a value distribution of the augmented image on the specific pixel (that is, a change distribution of the data augmentation). It can be learned that only a finite change can be brought by performing data augmentation in the related technology. However, a data change brought by performing data augmentation in this application is presented as a distribution, and there are an infinite quantity of change points on the distribution. In another aspect, in this embodiment of this application, in a process of evaluating a data augmentation policy, different data augmentation policies are evaluated through samples of different object types. Therefore, data augmentation policies corresponding to different object types are different. As shown in FIG. 16, distributions of pixel changes of a bird and an aircraft are different. However, in the related technology, only a same data augmentation policy can be used for different object types. Therefore, pixel changes after data augmentation in the related technology are the same regardless of the bird or the aircraft.

It should be noted that processes shown in steps 1314 to 1316 are that the first node sends the plurality of data augmentation policies to the third node, the third node determines the first target data augmentation policy based on the received plurality of data augmentation policies and sends the first target data augmentation policy to the application node, and the application node obtains the first target data augmentation policy from the third node. However, in some other embodiments, the first node determines the first target data augmentation policy based on the plurality of data augmentation policies, and sends the determined first target data augmentation policy to the application node. The application node performs, based on the first target data augmentation policy, data augmentation on a plurality of samples obtained from the data server, to obtain augmented samples, performs model training based on the plurality of augmented samples, and deploys a recognition model obtained through training to provide a service. The first node and the application node are, for example, respectively a first node and an application node in the data augmentation system shown in FIG. 14.

According to the data augmentation method provided in this embodiment of this application, a plurality of nodes collaborate to complete a data augmentation process. Because the plurality of nodes work in parallel, efficiency of performing data augmentation by the data augmentation system is improved.

It should be noted that data augmentation is separately performed on a sample in a common dataset CIFAR10NEI through the data augmentation policy provided in the related technology and the data augmentation policy provided in this application. In a case that manual baselines of precision of the recognition model obtained through training are all 92.1%, precision of the recognition model obtained through training based on the augmented sample obtained through the data augmentation policy provided in the related technology is 92.3%, while precision of the recognition model obtained through training based on the augmented sample obtained through the data augmentation policy provided in this application is 96.1%. It can be seen that precision of the recognition model obtained through training through the data augmentation policy provided in this application can be improved by 4%. In addition, in the related technology, a search time for searching to find a final data augmentation policy is 5000 GPU hours. However, in this application, in a process of searching for a final data augmentation policy, distributed evaluation is performed, and training is performed based on a pre-training model in the evaluation process. In this application, a search time for searching to find the final data augmentation policy is 114 GPU hours, and is reduced approximately 50 times compared with the search time in the related technology. A comparison between the precision of the recognition model and the search time of the data augmentation policy is shown in Table 1 as follows:

**Table 1**

| Comparison parameter | Manual baseline | Related technology | This application |
|---|---|---|---|
| Precision | 92.1% | 92.3% | 96.1% |
| Search time | | 5000 GPU hours | 114 GPU hours |

FIG. 17 is a schematic diagram of a structure of a data augmentation apparatus according to an embodiment of this application. The apparatus 1700 includes:

an obtaining module 1701, configured to obtain a first target data augmentation policy, where the first target data augmentation policy indicates target operation levels of data augmentation operations, and one target operation level indicates one operation intensity change interval; and
an augmentation module 1702, configured to perform, in operation intensity change intervals indicated by target operation levels of a plurality of data augmentation operations, the plurality of data augmentation operations on a first sample based on the first target data augmentation policy, to obtain a plurality of target augmented samples of the first sample.

In a possible implementation, for any data in the first sample, a change corresponding to any data augmentation operation occurs on the any data in the plurality of target augmented samples, and is within an operation intensity change interval indicated by a target intensity level of the any data augmentation operation.

In a possible implementation, the first target data augmentation policy is obtained through searching based on a plurality of configured operation levels of the plurality of data augmentation operations, a plurality of operation levels are configured for any data augmentation operation, and one operation level indicates one intensity change interval.

In a possible implementation, the first target data augmentation policy is determined based on a plurality of data augmentation policies, the plurality of data augmentation policies are obtained through searching based on a plurality of configured operation levels of the plurality of data augmentation operations, a plurality of operation levels are configured for any data augmentation operation, and one operation level indicates one intensity change interval.

In a possible implementation, the plurality of data augmentation policies are evaluated by a plurality of evaluation devices.

In a possible implementation, objects of second samples used for evaluating the plurality of data augmentation policies are a same object or objects of a same type.

In a possible implementation, the plurality of operation levels configured for the any data augmentation operation are obtained based on a target operation intensity change range of the any data augmentation operation, and the target operation intensity change range of the any data augmentation operation is configured by a configuration device.

Optionally, the apparatus 1700 further includes:

a division module, configured to divide, for any one of the plurality of data augmentation operations, the target operation intensity change range corresponding to the any data augmentation operation into a plurality of operation intensity change intervals; and
a configuration module, configured to configure an operation level for each of the plurality of operation intensity change intervals.

Optionally, the first target data augmentation policy further indicates a target operation probability of each of the plurality of data augmentation operations, and a target operation probability of the any data augmentation operation is a probability of performing the any data augmentation operation on the first sample; and
the obtaining module 1701 is configured to:
determine the first target data augmentation policy based on the plurality of data augmentation policies, where any data augmentation policy indicates an operation probability and an operation level of each of the plurality of data augmentation operations, and the operation probability of the any data augmentation operation is a probability of performing the any data augmentation operation on second samples.

Optionally, the obtaining module 1701 includes:

a selection submodule, configured to select a plurality of second target data augmentation policies from the plurality of data augmentation policies based on evaluation values of the plurality of data augmentation policies, where evaluation values of the plurality of second target data augmentation policies are all greater than evaluation values of data augmentation policies in the plurality of data augmentation policies other than the plurality of second target data augmentation policies, and an evaluation value of the any data augmentation policy indicates a degree of quality of a recognition model obtained through training based on an augmented sample obtained based on the any data augmentation policy; and
a generation submodule, configured to generate the first target data augmentation policy based on the plurality of second target data augmentation policies.

Optionally, the generation submodule includes:

a determining unit, configured to determine target operation probabilities and target operation levels of the plurality of data augmentation operations based on the operation probabilities and the operation levels of the plurality of data augmentation operations in the plurality of second target data augmentation policies; and
a generation unit, configured to generate the first target data augmentation policy based on the determined target operation probabilities and target operation levels of the plurality of data augmentation operations.

Optionally, the determining unit includes:

a clustering subunit, configured to: for the any data augmentation operation, cluster a plurality of operation levels of the any data augmentation operation in the plurality of second target data augmentation policies, to obtain at least one operation level category; and

a determining subunit, configured to: for any one of the at least one operation level category, determine, based on an operation level of the any operation level category and an operation probability of the any data augmentation operation in a third target data augmentation policy in the plurality of second target data augmentation policies, a target operation intensity and a target operation probability of the any data augmentation operation, where the third target data augmentation policy is a second target data augmentation policy to which the operation level of the any operation level category belongs.

Optionally, the determining subunit includes:

a first determining element, configured to determine a target operation level of the any data augmentation operation based on the operation level of the any operation level category; and

a second determining element, configured to determine the target operation probability of the any data augmentation operation based on the operation probability of the any data augmentation operation in the third target data augmentation policy in the plurality of second target data augmentation policies.

Optionally, the first determining element is configured to:

determine a minimum operation level and a maximum operation level in the any operation level category; and
determine each operation level that is greater than or equal to the minimum operation level and that is less than or equal to the maximum operation level as the target operation level of the any data augmentation operation.

Optionally, the first determining element is configured to:
determine each operation level in the any operation level category as the target operation level of the any data augmentation operation.

Optionally, the target operation probability of the any data augmentation operation is an average probability of operation probabilities of the any data augmentation operation in the third target data augmentation policy in the plurality of second target data augmentation policies.

The apparatus 1700 further includes:
an iteration module, configured to perform iterative calculation based on an initial data augmentation policy, to obtain the plurality of data augmentation policies.

Optionally, the iteration module is configured to:
determine, in a process of $i^{th}$ time of iterative calculation, an $i^{th}$ data augmentation policy in the plurality of data augmentation policies based on a data augmentation policy determined in processes of previous $i$ - 1 times of iterative calculation and each data augmentation policy in the initial data augmentation policy, where $i$ is an integer greater than or equal to 1 or less than or equal to $N$ , and $i$ is a total quantity of times of iterative calculation.

Optionally, the iteration module includes:

a first prediction submodule, configured to: for the any data augmentation operation, predict, based on a plurality of operation levels of the any data augmentation operation in the data augmentation policies and a plurality of evaluation values of the data augmentation policies, an operation level of the any data augmentation operation in the $i^{th}$ data augmentation policy, where an evaluation value of any data augmentation policy indicates a degree of quality of a recognition model obtained through training based on an augmented sample obtained based on the any data augmentation policy;

a second prediction submodule, configured to: for the any data augmentation operation, predict, based on a plurality of operation probabilities of the any data augmentation operation in the data augmentation policies and a plurality of evaluation values of the data augmentation policies, an operation probability of the any data augmentation operation in the $i^{th}$ data augmentation policy; and

a generation submodule, configured to generate the $i^{th}$ data augmentation policy based on the predicted operation levels and operation probabilities of the plurality of data augmentation operations.

Optionally, the first prediction submodule is configured to:

determine, based on the plurality of operation levels and the plurality of evaluation values, a multivariate Gaussian distribution that the operation level of the any data augmentation operation obeys; and
under the multivariate Gaussian distribution that the operation level of the any data augmentation operation obeys, determine an operation level that enables an acquisition function to take a maximum value as the operation level of the any data augmentation operation in the $i$ th data augmentation policy.

Optionally, the second prediction submodule is configured to:

determine, based on the plurality of operation probabilities and the plurality of evaluation values, a multivariate Gaussian distribution that the operation probability of the any data augmentation operation obeys; and
under the multivariate Gaussian distribution that the operation probability of the any data augmentation operation obeys, determine an operation probability that enables an acquisition function to take a maximum value as the operation probability of the any data augmentation operation in the $i$ th data augmentation policy.

The apparatus 1700 further includes:

an acquiring module, configured to perform the plurality of data augmentation operations on the plurality of second samples based on the operation probabilities and the operation levels of the plurality of data augmentation operations in the $i$ th data augmentation policy, to obtain a plurality of augmented samples of the plurality of second samples;
a training module, configured to obtain an $i$ th recognition model through training based on the plurality of augmented samples; and
a target obtaining module, configured to obtain an evaluation value of the $i$ th data augmentation policy based on the $i$ th recognition model.

Optionally, the training module is configured to:
train a pre-training model based on the plurality of augmented samples, to obtain the $i$ th recognition model, where the pre-training model is obtained through training based on a plurality of third samples of a plurality of objects of different types, and precision of the pre-training model is less than a precision threshold.
Optionally, an object of the first sample and an object of the second sample belong to a same category, or an object of the first sample and an object of the second sample are a same object.
Optionally, the apparatus 1700 further includes:

a first sending module, configured to send at least one $i$ th data augmentation operation policy to each of a plurality of evaluation devices; and
a first receiving module, configured to receive an evaluation value of the at least one $i$ th data augmentation operation policy from each of the plurality of evaluation devices.

Optionally, the first target data augmentation policy further indicates a target operation probability of each of the plurality of data augmentation operations, and a target operation probability of any data augmentation operation is a probability of performing the any data augmentation operation on the first sample; and
the augmentation module 1702 is configured to:
perform the plurality of data augmentation operations on the first sample based on the target operation probability and the target operation level of each of the plurality of data augmentation operations, where the any data augmentation operation is performed on a target augmented sample of the target operation probability of the any data augmentation operation.
Optionally, the augmentation module 1702 is configured to:
for the any data augmentation operation, perform, based on the target operation probability of the any data augmentation operation, the any data augmentation operation on the first sample in an operation intensity change interval range indicated by the target operation level of the any data augmentation operation.
Optionally, the apparatus 1700 further includes:

a second receiving module, configured to obtain the first sample from an application node through a target interface; and
a second sending module, configured to send the plurality of target augmented samples to the application node through the target interface.

All of the foregoing technical solutions may form optional embodiments of this disclosure through any combination. Details are not described herein again.
It should be noted that when the data augmentation apparatus provided in the foregoing embodiments performs data augmentation, division of the foregoing functional modules is merely used as an example for description. In actual application, the foregoing functions may be allocated to different functional modules for implementation based on a requirement, that is, an internal structure of the apparatus is divided into different functional modules to implement all or a part of the functions described above. In addition, data augmentation method embodiments provided in the foregoing embodiments pertain to a same concept. For details of a specific implementation process thereof, refer to method embodiments. Details are not described herein again.

An embodiment of this application further provides a computer program product or a computer program. The computer program product or the computer program includes a computer instruction. The computer instruction is stored in a computer-readable storage medium. A processor of a computing device reads the computer instruction from the computer-readable storage medium. The processor executes the computer instruction, to enable the computing device to perform the foregoing data augmentation method.

It should be noted that a person of ordinary skill in the art may be aware that, units, modules, chips, and method steps of the examples described with reference to embodiments disclosed in this specification can be implemented by electronic hardware, computer software, or a combination thereof. To clearly describe the interchangeability between the hardware and the software, the foregoing has generally described compositions and steps of the examples based on functions. Whether the functions are performed by hardware or software depends on particular applications and design constraint conditions of the technical solutions. A person skilled in the art may use different methods to implement the described functions for each particular application, but it should not be considered that the implementation goes beyond the range of the present invention.

It may be clearly understood by a person skilled in the art that, for the purpose of convenient and brief description, for a detailed working process of the foregoing system, apparatus, module, or unit, refer to a corresponding process in data augmentation method embodiments, and details are not described herein again.

In several embodiments provided in this application, it should be understood that the disclosed system, apparatus, and method may be implemented in other manners. For example, the described apparatus embodiment is merely an example. For example, division of modules in the apparatus or units in a module is merely logical function division and may be other division in actual implementation. For example, a plurality of modules or units may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules or units described as separate parts may or may not be physically separate, and parts displayed as modules or units may or may not be physical modules or physical units, that is, may be located in one location, or may be distributed on a plurality of computing devices. Some or all of the modules or units may be selected based on actual needs to achieve the objectives of the solutions of embodiments.

In addition, functional modules or units in embodiments of the present invention may be integrated into one target processing module, each of the modules or units may exist alone physically, or two or more modules or units are integrated into one target processing module. The integrated module or unit may be implemented in a form of hardware, or may be implemented in a form of a software functional unit.

A person of ordinary skill in the art may understand that all or some of the steps of the foregoing embodiments may be implemented by hardware or a program instructing related hardware. The program may be stored in a computer-readable storage medium. The aforementioned storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection range of this application.

**Claims**

1. A data augmentation method, performed by a first node, wherein the method comprises:

   obtaining a first target data augmentation policy, wherein the first target data augmentation policy indicates target operation levels of data augmentation operations, and one target operation level indicates one operation intensity change interval; and
   performing, in operation intensity change intervals indicated by target operation levels of a plurality of data augmentation operations, the plurality of data augmentation operations on a first sample based on the first target data augmentation policy, to obtain a plurality of target augmented samples of the first sample.

2. The method according to claim 1, wherein the first target data augmentation policy is obtained through searching based on a plurality of configured operation levels of the plurality of data augmentation operations, a plurality of operation levels are configured for any data augmentation operation, and one operation level indicates one intensity change interval.

3. The method according to claim 1, wherein the first target data augmentation policy is determined based on a plurality of data augmentation policies, the plurality of data augmentation policies are obtained through searching based on a plurality of configured operation levels of the plurality of data augmentation operations, a plurality of operation levels are configured for any data augmentation operation, and one operation level indicates one intensity change interval.

4. The method according to claim 3, wherein the plurality of data augmentation policies are evaluated by a plurality of evaluation devices.

5. The method according to claim 4, wherein objects of second samples used for evaluating the plurality of data augmentation policies are a same object or objects of a same type.

6. The method according to any one of claims 2 to 5, wherein the plurality of operation levels configured for the any data augmentation operation are obtained based on a target operation intensity change range of the any data augmentation operation, and the target operation intensity change range of the any data augmentation operation is configured by a configuration device.

7. The method according to claim 6, wherein a process of configuring the any data augmentation operation comprises:

dividing the target operation intensity change range of the any data augmentation operation into a plurality of operation intensity change intervals; and
configuring an operation level for each of the plurality of operation intensity change intervals.

8. The method according to claim 3, wherein the first target data augmentation policy further indicates a target operation probability of each of the plurality of data augmentation operations, and a target operation probability of the any data augmentation operation is a probability of performing the any data augmentation operation on the first sample; and
any one of the plurality of data augmentation policies indicates an operation probability and an operation level of each of the plurality of data augmentation operations, and the operation probability of the any data augmentation operation is a probability of performing the any data augmentation operation on second samples.

9. The method according to claim 8, wherein determining the first target data augmentation policy based on the plurality of data augmentation policies comprises:

selecting a plurality of second target data augmentation policies from the plurality of data augmentation policies based on evaluation values of the plurality of data augmentation policies, wherein evaluation values of the plurality of second target data augmentation policies are all greater than evaluation values of data augmentation policies in the plurality of data augmentation policies other than the plurality of second target data augmentation policies, and an evaluation value of the any data augmentation policy indicates a degree of quality of a recognition model obtained through training based on an augmented sample obtained based on the any data augmentation policy; and
generating the first target data augmentation policy based on the plurality of second target data augmentation policies.

10. The method according to claim 9, wherein the generating the first target data augmentation policy based on the plurality of second target data augmentation policies comprises:

determining target operation probabilities and target operation levels of the plurality of data augmentation operations based on the operation probabilities and the operation levels of the plurality of data augmentation operations in the plurality of second target data augmentation policies; and
generating the first target data augmentation policy based on the determined target operation probabilities and target operation levels of the plurality of data augmentation operations.

11. The method according to claim 10, wherein the determining target operation probabilities and target operation levels of the plurality of data augmentation operations based on the operation probabilities and the operation levels of the plurality of data augmentation operations in the plurality of second target data augmentation policies comprises:

for the any data augmentation operation, clustering a plurality of operation levels of the any data augmentation operation in the plurality of second target data augmentation policies, to obtain at least one operation level category; and

for any one of the at least one operation level category, determining, based on an operation level of the any operation level category and an operation probability of the any data augmentation operation in a third target data augmentation policy in the plurality of second target data augmentation policies, a target operation intensity and a target operation probability of the any data augmentation operation, wherein the third target data augmentation policy is a second target data augmentation policy to which the operation level of the any operation level category belongs.

12. The method according to claim 11, wherein the determining, based on an operation level of the any operation level category and an operation probability of the any data augmentation operation in a third target data augmentation policy in the plurality of second target data augmentation policies, a target operation intensity and a target operation probability of the any data augmentation operation comprises:

determining a target operation level of the any data augmentation operation based on the operation level of the any operation level category; and

determining the target operation probability of the any data augmentation operation based on the operation probability of the any data augmentation operation in the third target data augmentation policy in the plurality of second target data augmentation policies.

13. The method according to any one of claims 8 to 12, wherein before the first target data augmentation policy is determined based on the plurality of data augmentation policies, the method further comprises:
performing iterative calculation based on an initial data augmentation policy, to obtain the plurality of data augmentation policies.

14. The method according to claim 13, wherein the performing iterative calculation based on an initial data augmentation policy comprises:
determining, in a process of $i^{th}$ time of iterative calculation, an $i^{th}$ data augmentation policy in the plurality of data augmentation policies based on a data augmentation policy determined in processes of previous $i - 1$ times of iterative calculation and each data augmentation policy in the initial data augmentation policy, wherein $i$ is an integer greater than or equal to 1 or less than or equal to $N$, and $i$ is a total quantity of times of iterative calculation.

15. The method according to claim 14, wherein after the determining an $i^{th}$ data augmentation policy in the plurality of data augmentation policies, the method further comprises:

performing the plurality of data augmentation operations on the plurality of second samples based on the operation probabilities and the operation levels of the plurality of data augmentation operations in the $i^{th}$ data augmentation policy, to obtain a plurality of augmented samples of the plurality of second samples;
obtaining an $i^{th}$ recognition model through training based on the plurality of augmented samples; and
obtaining an evaluation value of the $i^{th}$ data augmentation policy based on the $i^{th}$ recognition model.

16. The method according to claim 15, wherein the obtaining an $i^{th}$ recognition model through training based on the plurality of augmented samples comprises:
training a pre-training model based on the plurality of augmented samples, to obtain the $i^{th}$ recognition model, wherein the pre-training model is obtained through training based on a plurality of third samples of a plurality of objects of different types, and precision of the pre-training model is less than a precision threshold.

17. The method according to any one of claims 1 to 16, wherein the first target data augmentation policy further indicates a target operation probability of each of the plurality of data augmentation operations, and a target operation probability of any data augmentation operation is a probability of performing the any data augmentation operation on the first sample; and
the performing, in operation intensity change intervals indicated by target operation levels of a plurality of data augmentation operations, the plurality of data augmentation operations on a first sample based on the first target data augmentation policy comprises:
performing the plurality of data augmentation operations on the first sample based on the target operation probability and the target operation level of each of the plurality of data augmentation operations, wherein the any data augmentation operation is performed on a target augmented sample of the target operation probability of the any data augmentation operation.

18. The method according to any one of claims 1 to 17, wherein the method further comprises:

obtaining the first sample from an application node through a target interface; and
sending the plurality of target augmented samples to the application node through the target interface.

19. A data augmentation apparatus, wherein the apparatus comprises:

an obtaining module, configured to obtain a first target data augmentation policy, wherein the first target data augmentation policy indicates target operation levels of data augmentation operations, and one target operation level indicates one operation intensity change interval; and
an augmentation module, configured to perform, in operation intensity change intervals indicated by target operation levels of a plurality of data augmentation operations, the plurality of data augmentation operations on a first sample based on the first target data augmentation policy, to obtain a plurality of target augmented samples of the first sample.

20. A computing device, wherein the computing device comprises a processor, and the processor is configured to execute program code, to enable the computing device to perform the method according to any one of claims 1 to 18.

21. A computer-readable storage medium, wherein the storage medium stores at least one piece of program code, and the at least one piece of program code is read by a processor, to enable a computing device to perform the method according to any one of claims 1 to 18.

FIG. 1

First node 101

Policy change space 1012 ← Operation pool 1011

Evaluation value of a historical data augmentation policy →

Policy optimizer 1013

↑ Label information fusion

Policy generator 1014

→ New predicted data augmentation policy

Application node

FIG. 2

| Operation level 1 | Operation probability 1 | | Operation level 2 | Operation probability 2 | ... | Operation level S | Operation probability S |

Data augmentation operation 1

Data augmentation operation 2

...

Data augmentation operation S

Data augmentation policy

FIG. 3

Evaluation result of a data
augmentation policy

Second node 102

Model training and
test

Sample

First
node 101

Data
augmentation policy

Second node 102

Model training and
test

Sample

Sample
(data server)

Evaluation result of a
data augmentation policy

First target data
augmentation
policy

Data
augmentation policy

Second node 102

Model training and
test

Sample

Evaluation result of a data
augmentation policy

Sample
(data server)

Application
node

Augmented
sample

Model training

Model
deployment
and service

FIG. 4

Second node 102

Pre-training
model

Data
augmentation
policy

Data
augmentation
Fine tuning

Effect
evaluation

Feed back an
evaluation result
of a data
augmentation
policy

FIG. 5

Evaluation result of a data
augmentation policy

Second node 102

Model training
and test

Data augmentation policy

First
node 101

Data augmentation policy

Second node 102

Model training
and test

Evaluation result of a
data augmentation policy

Data
augmentation policy

Evaluation result of a data
augmentation policy

Second node 102

Model training
and test

Augmented
sample

To-be-
augmented
sample

Target
interface

Augmented
sample

Model
training

Model
deployment
and service

FIG. 6

700

Computing device

| Processor | 701 |

| Memory | 702 |

FIG. 7

A first node configures a plurality of data augmentation operations and target operation intensity change ranges of the plurality of data augmentation operations — 801

The first node divides, for any data augmentation operation in the plurality of data operations, an operation intensity of the any data augmentation operation into a plurality of intensity levels based on a target operation intensity change range of the any data augmentation operation — 802

The first node configures probability change intervals for the plurality of data augmentation operations — 803

FIG. 8

| | |
|---|---|
| A first node obtains an initial data augmentation policy | 901 |

| | |
|---|---|
| The first node evaluates the initial data augmentation policy to obtain an evaluation value of the initial data augmentation policy | 902 |

| | |
|---|---|
| The first node performs iterative calculation based on the initial data augmentation policy, to obtain a plurality of data augmentation policies | 903 |

| | |
|---|---|
| The first node determines the first target data augmentation policy based on the plurality of data augmentation policies | 904 |

| | |
|---|---|
| The first node performs, in operation intensity change intervals indicated by target operation levels of a plurality of data augmentation operations, the plurality of data augmentation operations on a first sample based on the first target data augmentation policy, to obtain a plurality of target augmented samples of the first sample | 905 |

| | |
|---|---|
| The first node obtains a target recognition model through training based on the plurality of target augmented samples | 906 |

FIG. 9

FIG. 10

FIG. 11

FIG. 12

Data augmentation system

| First node | Second node | Third node | Application node |

1301: A first node obtains an initial data augmentation policy

1302: The first node sends the initial data augmentation policy to a second node

1303: The second node evaluates the received initial data augmentation policy to obtain an evaluation value of the initial data augmentation policy

1304: The second node sends the evaluation value of the initial data augmentation policy to the first node

1305: When $i$ is equal to 1, in a process of a first time of iterative calculation, the first node determines a first data augmentation policy in a plurality of data augmentation policies based on the initial data augmentation policy

1306: The first node sends the first data augmentation policy to the second node

1307: The second node evaluates the received first data augmentation policy to obtain an evaluation value of the first data augmentation policy

1308: The second node sends the evaluation value of the first data augmentation policy to the first node

TO FIG. 13B                      TO FIG. 13B                      TO FIG. 13B

FIG. 13A

1309: When $i$ is not equal to 1, in a process of an $i^{th}$ time of iterative calculation, the first node determines an $i^{th}$ data augmentation policy based on a data augmentation policy determined in processes of previous $i-1$ times of iterative calculation and each data augmentation policy in the initial data augmentation policy

1310: The first node sends the $i^{th}$ data augmentation policy to the second node

1311: The second node evaluates the received $i^{th}$ data augmentation policy to obtain an evaluation value of the $i^{th}$ data augmentation policy

1312: The second node sends the evaluation value of the $i^{th}$ data augmentation policy to the first node

1313: When a plurality of data augmentation policies determined after a process of a plurality of times of iteration satisfy a preset condition, the first node sends the plurality of data augmentation policies to a third node

1314: The third node determines the first target data augmentation policy based on the received plurality of data augmentation policies

1315: The third node sends the first target data augmentation policy to an application node

1316: The application node obtains a target recognition model based on the first target data augmentation policy

FIG. 13B

FIG. 14

FIG. 15

FIG. 16

FIG. 17

<table>
<tr><td colspan="2">**INTERNATIONAL SEARCH REPORT**</td><td colspan="2">International application No.<br>**PCT/CN2021/103015**</td></tr>
</table>

**A.    CLASSIFICATION OF SUBJECT MATTER**

G06N 20/20(2019.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 数据, 样本, 增强, 区间, 范围, 多样, 强度, 策略, 多种, 丰富, 扩充, 学习, data, sample, enhancement, interval, range, diversity, strength, strategy, variety, enrichment, expansion, learning

**C.    DOCUMENTS CONSIDERED TO BE RELEVANT**

| Category* | Citation of document, with indication, where appropriate, of the relevant passages | Relevant to claim No. |
|---|---|---|
| A | CN 111754494 A (SHENZHEN ONECONNECT TECHNOLOGY CO., LTD.) 09 October 2020 (2020-10-09)<br>abstract, description, paragraphs [0005]-[0051] | 1-21 |
| A | CN 111695624 A (BEIJING SENSETIME TECHNOLOGY DEVELOPMENT CO., LTD.) 22 September 2020 (2020-09-22)<br>entire document | 1-21 |
| A | CN 111832511 A (CHINA UNIVERSITY OF PETROLEUM (EAST CHINA)) 27 October 2020 (2020-10-27)<br>entire document | 1-21 |
| A | CN 111626342 A (OPPO GUANGDONG MOBILE COMMUNICATIONS CO., LTD.) 04 September 2020 (2020-09-04)<br>entire document | 1-21 |
| A | CN 110889457 A (SHENZHEN QIJI WISDOM NETWORK CO., LTD.) 17 March 2020 (2020-03-17)<br>entire document | 1-21 |
| A | CN 111611790 A (HUAWEI TECHNOLOGIES CO., LTD.) 01 September 2020 (2020-09-01)<br>entire document | 1-21 |

☑ Further documents are listed in the continuation of Box C.     ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **10 August 2021** | **02 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/103015**

**C.** **DOCUMENTS CONSIDERED TO BE RELEVANT**

| Category* | Citation of document, with indication, where appropriate, of the relevant passages | Relevant to claim No. |
|---|---|---|
| A | US 2019122120 A1 (WU, Dalei et al.) 25 April 2019 (2019-04-25)<br>entire document | 1-21 |

Form PCT/ISA/210 (second sheet) (January 2015)

**INTERNATIONAL SEARCH REPORT**
Information on patent family members

International application No.

**PCT/CN2021/103015**

| Patent document cited in search report | | | Publication date (day/month/year) | Patent family member(s) | | | Publication date (day/month/year) |
|---|---|---|---|---|---|---|---|
| CN | 111754494 | A | 09 October 2020 | None | | | |
| CN | 111695624 | A | 22 September 2020 | None | | | |
| CN | 111832511 | A | 27 October 2020 | None | | | |
| CN | 111626342 | A | 04 September 2020 | None | | | |
| CN | 110889457 | A | 17 March 2020 | None | | | |
| CN | 111611790 | A | 01 September 2020 | None | | | |
| US | 2019122120 | A1 | 25 April 2019 | WO | 2019075771 | A1 | 25 April 2019 |

Form PCT/ISA/210 (patent family annex) (January 2015)

**EP 4 235 525 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011606784
- CN 202011237954